# EUROPEAN PATENT APPLICATION

(11) **EP 0 860 889 A1**
(43) Date of publication of application: **26.08.1998**
(21) Application number: 95933633.0
(22) Date of filing: 06.10.1995
(51) Int. Cl.: H01M 10/30, H01M 10/40, H01M 10/44, H01M 8/00, H02J 7/00, G06K 19/07, H01M 2/10, B60L 11/18

(54) **SYSTEM USING SECONDARY CELLS**

(71) Applicant: Hitachi, Ltd., Chiyoda-ku, Tokyo 101-0062 (JP)
(72) Inventor: HONBO, Kyouko, Hitachi-shi, Ibaraki 316-0025 (JP); MURANAKA, Yasushi, Hitachinaka-shi, Ibaraki 312 (JP); KOMATU, Yoshimi, Hitachi-shi, Ibaraki 319-14 (JP); HORIBA, Tatuo, Hitachi-shi, Ibaraki 316 (JP); MIKAMI, Yoshirou, Hitachi-shi, Ibaraki 316 (JP)
(74) Representative: Beetz & Partner Patentanwälte
(86) International application number: JP9502054
(87) International publication number: WO9713288

(57) **Abstract**

In the system using secondary cells comprising at least one of a heat source, power, controlling circuit, driving circuit, LSI, IC and display element of a capacity of 0.5 to 50 kWh, wherein at least one of the cells of the secondary battery is capable of 15 minutes or more at 580 W /l or more.

## Description

### Technical Field

The present invention relates to a secondary cell using system, and more particularly to a secondary cell system which is excellent in characteristics of rapid charge and rapid discharge.

### Background Art

In recent years, a secondary cell becomes one of essential components for power sources of such as personal computers, portable telephones, electric vehicles, or electric power storage systems. Characteristics necessary for mobile communications (mobile computing) such as portable computers including pen computers and mobile communications (information terminals, personal digital assistants, personal intelligent communicator or hand held communicator) are low power consumption, installment of high performance-long life batteries and miniaturization. But, the performance of the secondary cell is still insufficient, and because the consumption of electric power of the back light of the liquid crystal display panel and the drawing control is large, the operating time of the cell is only 8 hours or less, despite of 8 hours charge time. Thus, the actual state is that the function as a mobile computing cannot be sufficiently exhibited.

In addition, the electric vehicles which do not exhaust gas and noise are drawing people's interest as the rise of the globe environmental problem. But, there are problems in electric vehicles such as difficulty of high speed driving, the need for a long charge time of 6 to 8 hours, a short driving distance, a bad acceleration, etc. These problems are caused by insufficient performance of the secondary cell. The high performance of the secondary cell is the key that realizes the high reliability, the high efficiency and the ultra-miniaturization of the electric vehicle system for 21st century.

The secondary cell of the large energy capacity by which the service life of equipment by one charging can be extended is drawing attention in view of handling of the equipment. The requirement for the large energy capacity by consumers is strong. There are nickel-metal hydride secondary batteries and lithium secondary cell as a secondary cell which have been under development in recent years. In the nickel-metal hydride batteries, negative electrodes whose main component is a metallic alloy for hydrogen storage are used. The nickel-metal hydride batteries can have interchangeability with the nickel-cadmium batteries with respect to the cell voltage, discharge characteristics, etc. and it is expected to increase the cell capacity by 50 to 100 %.

The lithium secondary batteries are the high capacity batteries like the nickel-metal hydride batteries because their cell voltage is high, and they are light weight. From the view point of consideration for the environment such as shortage of petroleum resources, ozone layer destruction by the exhaustion of carbon dioxide gas, and the leveling of the electric power consumption, it is thought that the above batteries are used as large-sized power sources such as the electric vehicle and the electric power storage power source of the dispersal type in the future.

Considering ease of handling of the batteries, the improvement of rapid charge characteristics that indicate how rapidly the batteries are charged has been required. When it comes to equipment that needs the large current discharge like the electric vehicles, the rapid discharge property is also important. If the large current discharge characteristic is insufficient, the application of the batteries is very limited.

In lead batteries and nickel-cadmium batteries, the rapid charge and rapid discharge characteristics are satisfactory to some extent, but the characteristics of the nickel-metal hydride batteries and lithium secondary batteries are insufficient. In order to improve rapid charge and discharge characteristics of the nickel-metal hydride batteries, several methods have been proposed. An electrode of hydrogen storage alloy made of super fine particles having the average grain size of 5 microns or less is used. (Japanese patent Laid-open print No. 60-119079). The pores of a diameter of 30 microns or more are provided in the sheet-form metallic alloy for hydrogen storage electrode containing a binding agent (Japanese patent Laid-open print No. 61-153947). The surface of the hydrogen storage alloy particles (mother particles) is coated with particles of the pure metal of which the average particle diameter is 1/10-1/200 of the mother particles of the nickel base alloy or of the stainless steel (Japanese patent Laid-open print No. 64-6366). The hydrogen storage alloy consisting of disorderly multiple-component materials constituted by combination of polycrystalline materials of being such as amorphous, microcrystaline or long-range that lack the structural order is used (Japanese patent publication No. 4-80512 ).

In the lithium batteries, the surface of the collector body is coated with nickel or titanium so as to improve rapid charge and discharging characteristics (Japanese patent Laid-open print No. 5-159781). The secondary batteries of the plate type that fulfill all these requirements are not yet proposed in which the secondary cell that is excellent in the capacity and the rapid charge property, and matched to the size requirement of the above system is necessary as a power source of the portable computers and the portable information terminals.

The high capacity secondary cell must be used for electric vehicles in order to extend the driving distance, but the voltage characteristics of the lithium secondary cell and nickel-hydrogen secondary cell greatly decline in the high output region. Increasing the recovery rate of regeneration energy in putting a brake is essential for realization of the high efficiency operation. For this purpose, secondary batteries of large capacity and being excellent in the rapid charge and rapid discharge properties are necessary.

In general, the electrode used for the batteries are manufactured as follows.

After finely grinding particles of a material that participates in the cell reaction, the porous electrode plates are manufactured by making a sheet with a binding agent for binding the particles or by binding the particles by sintering them. Making the average grain size smaller also increases the area of cell reaction in the porous substance layer that participates in the cell reaction. However, as particles of the substance relating to the cell are made finer, the falling of the material from the electrode becomes larger so that the cell capacity declines. The coating of impurities is formed in the material surface that participates in the cell reaction during the process of fine grinding so that the coating becomes resistance to cell reaction to lower the rapid charge and discharge characteristics. It is thought that there might be an effect in the increase of the reaction area when the pores are formed in the material surface that participates in the cell reaction, but there is no effect even if the fine pores are formed in the binding agent or between the particles. The provision of several pores in the electrode causes the declination of filling density of the material that participates in the cell reaction rather than to increase the reaction area, but to lower the capacity as a practical matter of course. Because such forming of pores lowers the electric contact between grains, rapid charge and discharge characteristics are deteriorated, instead. The formation of the continuous cracks causes the same result.

In the method of arranging the conductive particles around the substance relating to cell grains, the configuration of the arranged particles is of fibrous or film-form. As for the kinds of particles, carbon, metals or catalysts, etc. are acceptable. When a substance that has no cell reaction or has little action is added, the cell capacity may drop. When the crystal structure of the substance relating to the cell is made the non-ordering structure by the random multiple component substance which comprises materials of the polycrystalline, amorphous and/or microcrystalline, the storing sites and the active sites appear so that the surface area substantially increases.

The grain boundaries of the above mentioned disorderly material are disorderly and not clear. Thus, the stress by the expansion-shrinkage at the time of charging and discharging is relaxed so that cracks and voids are hard to generate and that the electric contact between particles does not deteriorate. Accordingly, the storage capacity is large, and the cycle life is also long. As for the cell reaction in the rapid charge and discharge, the charge-transfer reaction in the surface of the particles is controlling the cell reaction. Even if a lot of storing sites and active sites are formed three-dimensionally in the material, the speed of the cell reaction can not catch up the speed of rapid charge and discharge, if the reaction area of the surface is small.

The method of coating the collector with the conductive material such as nickel or titanium is done to make the contact resistance of the collector and the substance relating to cell small, and there are different methods. But, the resistance in the electrode, for example, contact resistance between particles and the reaction resistance between particles and electrolyte is much larger than the contact resistance between the collector and the substance relating to the cell reaction. The method for effectively improve the rapid charge and discharge characteristics of the batteries has not been discovered yet.

It is an object of the present invention to provide a secondary cell using system that improves the rapid charge and discharge characteristics of the secondary cell.

### Description of Invention

The present invention relates to a secondary cell using system that contains one or more loads with the capacity of the 0.5 to 50 kWh. The unit cell of the secondary cell is possible to discharge of at least 580 W/l for 15 minutes or more. The above load is a heat source, power source, controlling circuit, driving circuit, LSI, IC and display element, for example. At least one of the batteries of the secondary cell using system is possible to make a charge of 90% or more of the cell capacity at 300 W/l or more of charge, and possible to make the discharge of 200 Wh/l or more.

The ratio of the maximum performance time of the secondary cell using system to the charge time of secondary cell is 10 or more, and preferably 40 or 200. The secondary cell using system contains at least one of a liquid crystal display, multiple-layered wiring board, PCMCIA card (PC card), voice card, modem, portable telephone, facsimile and IC for the cell.

In the liquid crystal display system with the memory storage that contains the liquid crystal panel, the panel driving circumference circuit and the display interface circuit, the present invention relates to the secondary cell which is possible to make a rapid charge within one hour, preferably within 30 minutes or less and to make the maximum continuous duty for 10 hours or more, preferably 40 hours or more. The liquid crystal display system may or may not contain the back light as a component. In case of the display of the reflection mode, the display is power saving because the back light is unnecessary. The liquid crystal display system can have the circuit integrated on the panel. In addition, the cell system can be used in the power-saving system that omitted the periodical read-out of the field memory storage and the periodical writing to the pixels.

The low power consumption of the liquid crystal display system will further advance in the future. The consumption of power will become 1/50 of the present consumption of power in the future. In case when the secondary cell system of the present invention is employed, the liquid crystal display system will be possible to work continuously for 5 days in 8 hours per day. Further, the present invention relates to a secondary cell system which comprises a secondary cell having the capacity of 2 Wh or more per inch of the liquid crystal display panel and at least one of a cell charger, charge control equipment, charge controlling circuit and management system that have a capacity of 2 W or more, preferably 8 to 36 W per inch of the liquid crystal display panel and a rapid charge performance of one hour or more per one inch of the liquid crystal display panel.

The secondary batteries used in the present invention have a rapid charge of at least 1 CmA, preferably at least 2 CmA, when they are used in the assembled batteries. The charge control of the present invention is the constant-current charge, the constant-potential charge or the constant current constant-potential charge. The charge control my be a -Δ V charge method, a method wherein charge is stopped by temperature rise, a method wherein the charge is shutdown at a predetermined potential, or a method wherein charge is shutdown in a predetermined time. And, pulse charge is acceptable. By monitoring the voltages of the batteries, charge is done by bypassing current to avoid overcharge of the batteries. By taking out the signal from the microcomputer that built in the batteries, the charge is controlled.

The system can have a management system that indicates the kinds of batteries, the charge voltage, the charge current, the alarm signal and the cell condition. The liquid crystal display system has the secondary batteries, which are disposed in the volume of which width is 0.85 to 1.2 per the width of the screen of the liquid crystal display panel and of which length is 1.0 to 1.8 per the length of the screen of the liquid crystal display panel, and of which thickness is 3 to 20 mm. The secondary cell system of the present invention can build in the microcomputer that controls the charge or discharge or both. The liquid crystal display system has the secondary cell composed of the set batteries of 6 parallels or less in 2 series or less wherein lithium secondary batteries are used as the secondary batteries. The lithium secondary batteries may be lithium ion batteries. The nickel-hydrogen secondary batteries are used as secondary batteries composed of the set batteries of 4 parallels or less in 3 to 5 series. The nickel-hydrogen secondary batteries may be batteries using the metallic alloy for hydrogen storage.

The secondary batteries that can be applied to the present invention are the lithium secondary batteries or the nickel - hydrogen secondary batteries. Nickel - cadmium batteries and the lead batteries are improper for the present invention because their capacity is too small, even if their rapid charge is possible. The secondary cell system of the present invention installs at least one of the liquid crystal display, the multiple-layered wiring board, the PCMCIA card (PC card), the voice card, the modem and the IC for the cell. In addition, a circuit for preventing overcharge and overdischarge of the secondary batteries, or a circuit for controlling charge-discharge is integrated with the circuit in the system.

The liquid crystal display system of the present invention can be applied to such systems as the portable information terminal, the portable computer, the pencomputer, the portable telephone, the personal-handy phone or the system with the function of the video telephone.

In addition, the secondary cell system of the present invention can be applied to the electric vehicles, the elevators, the electric cars and the emergency power sources. In the electric vehicles having the secondary batteries with the driving parts including a motor and an inverter, the secondary cell system is possible to be rapidly charged within one hour, preferably 30 minutes or less, and can drive a distance of at least 250 km at a speed of 40 km/h by one charge. The weight of the system is 200 kg or less. The electric vehicle of the present invention uses the secondary batteries which are chargeable within 30 minute or less. The cell system of the present invention has the travel distance of 250 km or more at a speed of 40 km/h by one charge. The secondary cell system of which total weight is 200 kg or less that can secure the above travel distance is mounted on the vehicle. The minimum time necessary for travel from a stopped spot to 400 m by the above electric vehicle is 18 seconds or less. In the electric vehicle using the secondary cell system and a fuel cell or solar cell with the control part that controls the operation of these output with the motor driven by the secondary cell, the secondary cell is possible to be rapidly charged within one hour or less, preferably 30 minutes or less, and it is possible to drive at least 300 km at a speed of 40 km/h by discharge of the secondary cell and/or generation of the fuel cell or solar cell. Moreover, the sum of the weight of the secondary cell and the fuel cell or the solar cell is 250 kg or less. A hybrid power source combined with a gasoline engine is acceptable.

The features of the secondary cell used for the system of the present invention are explained below.

The positive electrode or the negative electrode contains a particle material that participates in the charge and discharge reaction. The particles contain at lest two phases. At least one of the multiple phases is made of electrodes having fine pores.

The particles are made of the multiple phases of at least 2. At least one of the multiple phases has the pores and cracks. At least one of the multiple phases has fine pores formed by dissolution.

The particles have fine pores formed by dissolution or vaporization of at least one of the multiple phases and have cracks formed by formation of the charge reaction product or the discharge reaction product. At least two of phases are materials that can participate in charge or discharge reaction have different the charge capacity or the discharge capacity from each other. Either the charge capacity or the discharge capacity does not become an issue.

When the value of the charge capacity or the discharge capacity of the two phases is different, the stress fracturing will occur to form cracks. At least two of the phases are the materials that shows different expansion coefficient or different coefficient of contraction at the charge or the discharge reaction. The value of the expansion coefficients or the coefficients of contraction is not problem. When the values of the expansion coefficient or the coefficient of contraction of two phases are different, the stress fracturing will occur to form cracks. The expansion coefficient or the coefficient of contraction is determined by the increase or decrease of the lattice constants obtained by X-ray diffraction measurement results.

The cracks are formed in at least one region selected from the group consisting of at least one fine pores that participates in the charge or discharge reaction, their boundaries and the combinations thereof. The cracks pins phases that remain in the phase which does not participate in the charge or discharge reaction or in the phase that remains undissolved or not vaporized so that the cracks do not spread anymore. Therefore, the cracks do not progress to form the bores generated from the deep cracks, so that the electric contact between particles is not broken.

It is possible to increase the reaction area of the surface by forming many short cracks, because there are a lot of sources of cracks such as at least two phases that participates in the charge and discharge reaction, existence of the fine pores, their boundaries to which stresses are easily applied. The cracks of the particles can be formed by at least one method selected from the charge reaction, the discharge reaction of the cell, similar reactions, or reactions between the particles with at least one of an electrolyte, acid, alkali, oxidizing agent and reducing agent or the reactions of their combinations. The similar reactions are the reactions between hydrogen in gaseous phase and a hydrogen storage metal at a certain temperature under a pressure where the metal absorbs and desorbs hydrogen in case of the metallic alloy for hydrogen storage of the nickel-metal hydride secondary cell. Similarly, the reactions to absorb hydrogen in the alloy, which is accompanied by the occurrence of the hydrogen gas in the liquid phase is used. For example, a thermodynamic reaction between lithium and the particles in case of the lithium secondary cell. The reaction with the electrolyte is the corrosion reaction or oxidation reaction between the electrolyte and the alloy that are generally used for the nickel-metal hydride secondary batteries in case of the hydrogen storage metal alloy of the nickel-metal hydride secondary cell.

In case of the lithium secondary cell, the reactions are decomposition reaction of electrolytes in the surfaces of negative electrode or positive electrode or ones between the impurity in the negative electrode or positive electrode and the electrolyte or reactions between active sites, for example, radicals and the electrolyte.

The fine pores are present in the particle surface that touches with the electrolyte. The pores contributes to the cell reaction, and thus there must be at least in the surface in contact with the electrolyte.

The surface of the particles of the material that participates in the charge and discharge reaction has pores in the electrode of the cell of the present invention. The composition of the pore surface is different from the composition of the particle surface. The particles are the so-called primary particles. Unlike the pores formed between particles by making the particles gather, the active coating is formed in the surface of the pores made by dissolution, etc. by the elements, etc. that exist on the particle boundaries of the phases and other phases formed by dissolution, etc. or evaporation.

The particles are composed of several phases, at least one of which is dissolved or vaporized to form pores, and the surface of the pores contains transition metals or noble metals. The transition metals or noble metals exist in the coating of oxides, hydroxides, carbonates, chelate complexes and solid solutions of different metals. In case where the particles consist of alloys, the particles are the alloy including at least 2 kinds of elements, and the alloy has the first phase and at least one second phase precipitated in the first phase. At least one of the second phase has pores formed by evaporating or dissolution. At least one of the second phases is the material that shows the charge and discharge capacity different from that of the first phase. In addition, the cracks may be formed to the particles.

When the principal component of the particles is carbon, the carbon particles have at least one phase. The pores are formed in the surface of the carbon by dissolution or vaporisation of at least one phases. The pores exist only in the face that can be in contact with the electrolyte. The pores do not necessarily exist in the interior of the particles that cannot be in contact with the electrolyte. When the particles are of carbon and an additive component, the phases are the additive component or compounds of carbon and the additive component.

At least one of the phases is the material that shows the charge and discharge capacity different from that of carbon. And, the cracks are formed in the particles. When the particles are oxides or sulfides, the material is of oxides or sulfides containing at least two kinds of elements. These compounds have the first phase and at least one kind of the second phase precipitated in the first phase, at least one of the phases having pores formed by dissolution or vaporization of at least one of the phases.

At least one of the second phases is the material that shows the charge and discharge capacity different from that of the first phase. The cracks are formed in the particles. The secondary cell used for the present invention is possible to make a discharge for at least 15 minutes at 580 W /l of output density per one cell. This cell is possible to make a discharge of at least 200 Wh/l in 90 % or more of the cell capacity at a charge of 300 W/l or more.

The secondary cell used for the present invention is explained in detail below.

The positive electrode and/or the negative electrode of the present invention are manufactured by the following processes:
1) a process for manufacturing the negative electrode by agglomerating particles of the substance relating to cell reaction; and
2) a process for generating pores in the second phase by dissolution or vaporization of the first phase with 2 or more kinds of the phases that participate in the charge and discharge reaction, at least one of the second phases is dissolved with an acid, alkali, oxidizing agent or reducing agent or evaporating it to form the pores.
   The manufacturing process may further include the following steps:
3) a process for agglomerating the particles of the substance relating to cell reaction and shaping the particles into a positive electrode or process; and
4) a process for forming cracks in the shaped electrode by forming charged products or discharged products through the charge reaction, discharge reaction or the similar reaction.

In the secondary cell in which the positive electrode and the negative electrode were arranged to be in contact with the electrolyte, the manufacturing method of the electrodes of the present invention has the following processes:
1) a process for distributing reaction products of a first phase, second phase that can participate in the charge and discharge reaction and third phase that forms pores by dissolution or evaporation;
2) a process crushing the product wherein the second and third phases are dispersed in the first phase;
3) a process for causing the crushed particles to make cracks by forming the charge reaction products, discharge reaction products or similar reaction products; and
4) a process for molding the particles into plate.

There are methods for combining the particles including such as a mechanical alloying method, a method of solid phase reaction, a method of gas phase reaction, a method of liquid phase reaction, a gas atomizing method ( a method of spraying around the temperature from which the second phase separates ).

As another method, the following one is proposed.
1) The first phase component, the second phase component that can participate in the charge and discharge reaction and the third phase component being able to form pores by dissolution or evaporation of the component are mixed.
2) The component of the first phase is melted, cooled and crushed.
3) The third phase of the crashed particles is dissolved with an acid, alkali, oxidizing agent or reducing agent to form pores in the surface of the particles.
4) The particles with the pores can be molded into the plate.

As mentioned above, the pores are formed by bringing the third phase into contact with a reaction gas to effect selective evaporation of the third phase. The second or third phase can be formed by adding the second and third phases to the molten metal of the component of the first phase. The third phase is prepared from alloys, intermetallic compounds or single components that are able to be dissolved with acids, alkali, oxidizing agents or reducing agents, then the alloys, etc. are dissolved with a dissolving agent to form pores, and the product is formed into a shape of electrode( such as a plate).

It is possible to dissolve the third phase after molding the particles into the electrode configuration to form the pores. The present invention can be applied to the secondary cell that is composed of the negative electrode, positive electrode and an electrolyte distributed in the electrodes. If necessary, a separator is disposed between the positive electrode and the negative electrode. The present invention is desirably applied to closed type secondary batteries such as nickel-metal hydride batteries, lithium batteries, etc.

The alloys used in the present invention are comprehended to cover so-called intermetallic compounds. For example, the secondary batteries can be the secondary batteries with a casing accommodating the positive electrode, the negative electrode of hydrogen storage alloy electrolyte and an electrolyte. The negative electrode of hydrogen storage alloy is formed by agglomerating the hydrogen storage alloy particles. A separator can be disposed between the positive electrode and the negative electrode. By applying the negative electrode of hydrogen storage alloy to the present invention, the catalytic activity of the hydrogen occlusion reaction can be obtained. By the catalytic activity of the active radicals (thought to be as active elements, etc. with the hole or the unpaired electrons) that remain in the pores, the rapid charge-discharge characteristics can improved so as to extend the life of the cell.

The present invention can be applied to the secondary cell filled with the non-water electrolyte wherein a positive electrode and negative electrode are accommodated in a casing, which carries out charge-discharge by releasing and inserting alkali metal ions (for example, lithium ions) in the positive electrode and the negative electrode. In case of carbon or conductive polymer negative electrode, lithium ions are inserted from the edge part of 6 membered ring to effect intercalation reaction. Because there are a lot of the edge parts of the 6 member ring, so-called end parts existing in the pores, the reaction can easily take place. As a result, rapid charge-discharge characteristics can be improved to realize a large energy capacity. Because the active material of the positive electrode is the anions in the electrolyte in case of the positive electrode of conductive polymer, the electrolyte absorption rate by the pores can be increased, and the charge and discharge reaction can be smoothly progressed. In case of the positive electrodes of metallic oxides or sulfides, metallic ions are substituted with transition metals in the positive electrode to form defects, whereby the lithium ions can be inserted into the defects. That is, the increase of the defects can increase the reaction sites of lithium to increase the energy capacity of the cell.

The configurations of the substance relating to cell reaction and pores can be any form of ball, ellipse-form, cone-form, fibrous-form, doughnut-form, basket-form, cube, rectangular parallelepiped, or random shape. For example, the present invention can be applied to the following cell electrodes. If the performance is improved by forming the pores, the present invention also can be applied to other cell electrodes. The metallic alloy for hydrogen storage can be used which is made of the following components as a material that participates in the charge and discharge reaction of the negative electrode of the nickel-hydrogen cell. The following alloys, etc. are used which are composed of the first phase, the second phase that can participate in charge-discharge reaction and the third phase. The following alloys can be dissolved or the evaporated to form the pores.
- Alloys composed of nickel and at least one of magnesium, lanthanum, cerium, neodymium, praseodymium, titanium, zirconium, hafnium, niobium, palladium, yttrium, scandium and calcium
- Alloys containing at least one of the following elements besides the above components.

Aluminum, cobalt, chromium, vanadium, manganese, tin, barium, molybdenum, tungsten, carbon, lead, iron, potassium, sodium, lithium and boron

For example, the following alloys are exemplified.
(La-Ce-Nd-Pr)-(Ni-Mn-Al-Co)
(La-Ce-Nd-Pr)-(Ni-Mn-Al-Co-B),
(La-Ce-Nd-Pr)-(Ni-Mn-Al-Co-W),
(La-Ce-Nd-Pr)-(Ni-Mn-Al-Co-Mo)
The range of ( )/( )=1/4.5 - 5.5, when converted in the atomic ratio. Among the alloys, the second phase that participates in the charge-discharge reaction is the following:
La_{0.5 - 2.5}Co, La_{0.5 -2.5}Ni, La_{0.5 - 2.5}Mn, Ce_{0.5 - 2.5}Co, La_{0.5 - 2.5}Al, Ce_{0.5 - 2.5}Ni

At least one of V, Fe, Ti, Nb and Ca can be alloyed to the above alloys to compose the following alloys wherein the second phase containing the following components may be precipitated. Ti_{0.5 - 2.5}Ni, Nb_{0.5 - 2.5}Ni, Ca_{0.5 - 2.5}Ni, Ti_{0.5 - 2.5}Fe, Ti_{0.5 - 2.5}V

Further, (Zr)-(Ni-V-Mn) alloys are acceptable. At least one of Co, Fe, Cr, Sn, Sn, B, Mo, W and C can be added to this (Ni-V-Mn) side further, and the range of ( )/( )=1/1.5 - 2.5, when converted in atomic ratio. At least one of Ti, Hf, Y and Nb can be added to (Zr) side further. The combinations are, for example, Co and Mo, Co and B, Cr and Mo or Co and W, etc. The second phases that participate in the charge and discharge reaction are the following:
Zr_{0.5to2.5}Co, Ti_{0.5to2.5}V, Zr_{0.5to2.5}Ni, Zr_{0.5to2.5}Mn, Zr_{0.5to2.5}V, Ti_{0.5to2.5}Ni, Nb_{0.5to2.5}Ni, etc.

Ca, La, Ce, etc. can be added to the above alloys to obtain the second phases of the following.
La_{0.2to2.5}Ni, Ce_{0.2to2.5}Ni, Ca_{0.2to2.5}Ni, La_{0.2to2.5}Fe, Ce_{0.2to2.5}Co, Ca_{0.2to2.5}V, etc.
(Mg)-(Ni-Al-Mn)or(Mg)-(Ni-V-Mn), wherein at least one of Co, Fe, Cr, Sn, B, Mo, W and C is added to the (Ni-V-Mn) or (Ni-Al-Mn) side further. The range of ( )/( )=2/0.5 - 1.5, when converted in the atomic ratio. At least one of Zr, Ti, Hf, Y and Nb is added further to (Mg) side. The second phases that participate in the charge and discharge reaction are:
Mg_{0.5to2.5}Co, Mg_{0.5to2.5}Ni, Mg_{0.5to2.5}Mn, Ti_{0.5to2.5}Co, Ti_{0.5to2.5}Fe, Ti_{0.5to2.5}V, Ti_{0.5to2.5}Ni, Ti_{0.5to2.5}Mn, Zr_{0.5to2.5}Ni or Hf_{0.5to2.5}Ni.

Further, Ca, La, Ce , etc. are added to the above alloys to precipitate the following second phases:
La_{0.2to2.5}Ni, Ce_{0.2to2.5}Ni, Ca_{0.2to2.5}Ni, La_{0.2to2.5}Fe, Ce_{0.2to2.5}Co, Ca_{0.2to2.5}V, etc.

(Ti)-(Ni-Al-Mn) or (Ti)-(Ni-V-Mn), wherein at least one of Co, Fe, Cr, Sn, B, Mo, W and C is added to the (Ni-V-Mn) and (Ni-Al-Mn) side further in the range of ( )/( )=1/0.5 - 2.5, when converted in the atomic ratio. At least one of Zr, Mg, Hf, Y and Nb is added to the Ti side further. The second phases that participate in the charge and discharge reaction may be composed of the following.
Mg_{0.5 - 2.5}Co, Mg_{0.5 - 2.5}Ni, Mg_{0.5 - 2.5}Mn, Ti_{0.5 - 2.5}Co, Ti_{0.5 - 2.5}Fe, Ti_{0.5 - 2.5}V, Ti_{0.5 - 2.5}Ni, Ti_{0.5 - 2.5}Mn, Zr_{0.5 - 2.5}Ni, Hf_{0.5 - 2.5}Ni, etc. Ca, La Ce, etc. are added to the above alloys to precipitate the following alloys.
La_{0.2 - o2.5}Ni, Ce_{0.2 - o2.5}Ni, Ca_{0.5 - 2.5}Ni, La_{0.2 - 2.5}Fe, Ce_{0.2 - 2.5}Co, Ca_{0.2 - 2.5}V, etc.

For example, the phases of the following component can be used as a dissolution phase of the metallic alloy for hydrogen storage. In addition to V and Ti, the phase can contain any of B, C, Cr, W, Mo, Sn, Mg, K, Li or Na. In addition to Al and Mn, the phase can contain any one of B, W or Mo. Such phases as Ni-Ti, Zr-Ni, Zr-Mn, B-Al-Co, B-Ni-Mn, etc. are exemplified.

As materials that contribute to the charge and discharge reaction of the positive electrode of the lithium batteries, the compounds (alloys, etc.) of the following components are used. The following compounds, etc. containing the dissolution phase and the second phase that participates in charging and discharging can be used. Compounds (alloys) consisting of oxygen and at least one of lead, manganese, vanadium, iron, nickel, cobalt, copper, chromium, aluminum, molybdenum, boron, tungsten, titanium, niobium, tantalum, strontium, bismuth and magnesium are used. The compounds can be composite oxides. Compounds of sulfur and at least one of titanium, molybdenum, iron, tantalum, strontium, lead, niobium, boron, magnesium, aluminum, tungsten, copper, nickel, vanadium, bismuth and manganese are used. The compounds can be sulfides. The compounds can be complex compounds of sulfur and oxide containing lithium.

Conductive polymers (for example, polyaniline, polyparaphenylene, polyacene and polypyrrole) can be used. Compounds of the conductive polymers and at least one of the following elements can be used.

Carbon or compounds of carbon and at least one of iron, silicon, sulfur, copper, lead, nickel, vanadium, silver, boron, molybdenum, tungsten, aluminum and magnesium are used.

As a material that contributes to the charge and discharge reaction of the positive electrode of the lithium cell, the materials containing at least one of the following materials can be used. LiCoOₓ, LiMnOₓ, LiNiOₓ,LiFeOₓ, LiNi_{0.5}Co_{0.5}Oₓ, LiCo_{0.5}Mn_{0.5}Oₓ, LiNi_{0.5}Mn_{0.5}Oₓ, LiNi_{0.5}Fe_{0.5}Oₓ, LiFe_{0.5}Co_{0.5}Oₓ, LiFe_{0.5}Mn_{0.5}Oₓ, LiMn₂Oₓ, TiSₓ, MoSₓ, LiV₃O₂ₓ, or CuV₂O₃ₓ, LiAl_{0.5}Co_{0.5}Oₓ, LiAl_{0.5}Mn_{0.5}Oₓ, LiMg_{0.5}Mn_{0.5}Ox, LiAl_{0.5}Fe_{0.5}Ox, LiFe_{0.5}Mg_{0.5}Oₓ or LiNi_{0.5}Al_{0.5}Oₓ. The sum of the transition metal components should be 0.8 - 1.3, but it is not necessarily to be 0.5. The range of X is 1.5 - 2.5.

As materials that contribute to the charge and discharge reaction of the negative electrode of the lithium cell, the materials containing at least one of the following compounds (alloys, etc.) can be used. Carbon (carbon black, furnace black, pitch like carbon, mesophase carbon, PAN series carbon, glassy carbon, graphite, amorphous carbon, fullerene and mixtures thereof. There are carbon compounds of the following elements such as iron, silicon, sulfur, copper, lead, nickel, vanadium, silver, boron, molybdenum, tungsten, aluminum and magnesium.

Conductive polymers (for example, polyaniline, polyacene and polypyrrole) can be used. There are compounds of the conductive polymers and the following elements such as iron, silicon, sulfur, copper, lead, nickel, vanadium, silver, boron, molybdenum, tungsten, aluminum, magnesium and carbon.

Alloys comprising at least one of manganese, nickel, copper, calcium, magnesium, germanium, silicon, tin, lead and silver. For example, Si-Ni, Ge-Si, Mg-Si, Si-Ni-Ge, Si-Ni-Mg, Si-Ni-Mn, Si-Ni-Cu, etc. can be used.

When manufacturing the materials consisting of alloys that contribute to the charge and discharge reaction, the components are melted and cast, and then the ingots are subjected to aging treatment or cooling at a controlled speed to form the second phase that dissolves in acids or alkalis, etc. and to form cracks. As alloying components for dispersing the deposition phases, additional elements can be contained to adjust the size of the precipitates. Desirable additional elements have the action to induce deposition of the alloying components. For example, the materials are formed so that dissolution phases disperse in the manufactured alloy (so-called primary particles in the case of particles)y. The alloy materials can be manufactured by the mechanical alloying method and the mechanical grinding method. The degree of alloying is controlled by optimizing the rotational frequency and time in the mechanical alloying method and the mechanical grinding method so that the phase that is dissolved in alkali and the second phase that participates in charge and discharge reaction are segregated by not making homogeneous the materials to manufacture desired negative electrodes (or particles for constituting the negative electrode).

When manufacturing the materials consisting of carbon and the conductive polymers that contribute to the charge and discharge reaction, the components for the dissolvable phase as raw materials are mixed and melted to disperse the dissolution phases and the second phase that participates in charge and discharge in carbon, etc. In case the materials that contributes to the charge and discharge reaction are the oxides, composite oxides, the sulfide or composite sulfides, this method can be adapted, too.

Dissolution phases can be dispersed by mixing and heat-treating carbon, the conductive polymer and the components of the dissolving phase. A heat treatment temperature of 300 °C to 3500 °C is desirable. In case the materials are used for the positive electrode of the lithium cell, a preferable temperature is 300°C to hundreds °C. In case the materials are used as a negative electrode, the conductivity polymers are carbonized at 1000 °C to 3500 °C. The material that participates in the charge and discharge reaction (so-called active substance) is obtained by heat-treatment after dissolving with an acid to form the pores. The materials can be evaporated by contacting with the reaction gas instead of the dissolution.

The present invention is hard to apply to a case where the composition in the material (so-called primary particles in case of particle-form) that contributes to the charge and discharge reaction becomes homogeneous as a whole by a heat treatment (for example, uniformed processing, etc.). It is desirable that deposition phases that are easier to dissolve in an acid, alkali, etc. than the mother phase (the first phase) and the second phase that participates in charge and discharge disperse in the first phase. The dissolution phase and the second phase that participates in charge and discharge can be formed by deposition of the alloy, as mentioned above. For example, the particles can be mixed into the mother phase (the first phase) that consists of carbon and the conductive polymer as a dissolution phase and the second phase that participates in charge and discharge in case of carbon and conductive polymers.

The porous electrode of the present invention can be made by either of the following steps.
- bonding with a binding agent
- Mechanical pressurizing powder
- Sintering
- Chemical Agglutination

The electrode especially suitable for the present invention is the electrode of which the material contributing to the charge and discharge reaction is an electrode of a so-called the intercalation type. In the electrode of the dissolution-deposition type wherein the material participating in the charge and discharge reaction in the electrode dissolves from the surface of the electrode by the charge and discharge reaction. The effect of the pores cannot be expected sufficiently, when repeating charging and discharging.

The crack formation method that is especially suitable for the present invention is the method of pre-charging or pre-discharging after assembling the cell. As a result, the charge products or the discharge products are formed so that the cracks are formed.

There are the following materials as acids, alkalis, oxidizing agents or reducing agents that are used for making pores and cracks. If materials are not contrary to the purposes of the present invention, the materials are not limited to the following ones.
- • Acids :: Nitric acid, hydrofluoric acid, hydrochloric acid and sulfuric acid
- • Alkalis :: Potassium hydroxide and sodium hydroxide
- • Oxidizing agents :: Sodium hypochlorite, potassium hypochlorite and hydrogen peroxide water
- • Reducing agents:: formalin, hydrogenated boric acid sodium and phosphorous acid potassium, Sodium hypophosphite

As gases for evaporating the reacted material and to form the pores in the electrode, reactive gases such as halogen and oxygen are used. The phase to be evaporated is brought into contact with halogen gas such as F₂ , Cl ₂ and Br₂ or O₂ to selectively evaporate the phase, thereby to form the pores by the volume change. The present invention also can be applied to the electrode as it is.

The present invention relates to a power source system with the operation control unit for the power source in the power source system using the secondary cell in which the positive electrode and the negative electrode are arranged through the electrolyte, wherein a positive electrode or a negative electrode contains a particle material that participates in the charge and discharge reaction, the particles comprising at least two phases, at least one of which has the pores and cracks, the output of the secondary cell is more than 580 W/l, and the cell can discharge for 15 minutes or more. The system being is composed of a secondary cell and at least one of a fuel cell, solar cell, air cell and sodium-sulfur cell, wherein the secondary cell is used at the time of the discharge in the high output. The rapid charge-discharge characteristics of the secondary cell that is applied to the system of the present invention is 90 % or more of the capacity in the charge of more than 300 W/l, and the discharge of (200 Wh/l or more is possible by effects of the pores or the cracks. The rapid discharge property is 15 minutes or more at the above 580 W/l, which is not found in the conventional cell.

When this cell is used for the secondary cell system having at least one of a heat source, power source, controlling circuit, driving circuit, LSI, IC and display element each having the capacity of from 0.5 Wh to 50 kWh, The longest time that the system operates for the charging time is 10 times or more of the conventional system, and more preferably 40 - 200 times. When only batteries that cannot discharge 200 Wh/l or more in 90 % or more of the capacity of 300W/l or more are used, there is a case that the system maximum performance time for the charging time is smaller than 10 times. The operability of systems, electric vehicle, etc. having the function of the liquid crystal display system, the portable information terminal using the liquid crystal display system, the portable computer, the pencomputer or the portable telephone by the present invention is remarkably improved. In the system with the function of the liquid crystal display system, the portable information terminal using the liquid crystal display system, the portable computer, the pencomputer, the portable television or the portable telephone, which use the secondary cell of the present invention, the charging time of secondary cell can be shortened in one hour or less. Because the continuous duty for long time, which has been difficult in the conventional system, becomes possible, the use range widens to the destination of business trips, the outdoors or in the vehicle.

The secondary cell used for the present invention has the characteristics of the rapid charging of one hour or less, preferably 30 minutes or less and the long continuous duty of 40 h or more. 40 Hours operation is a continuous duties for 5 days in using 8 hours per one day, which fulfills the requirement of normal businessmen.

In the present invention, the advantages of the present invention are evaluated based on the consumption of electric power of the liquid crystal display being 0.05 W per one inch of the display. It is necessary that the capacity of the cell is 2 Wh or more per 1 inch. In case the cell capacity is smaller than 2 Wh, the longest continuous duty of 40 hours or more is difficult. The charge of the secondary cell of the present invention is completed within one hour or less by charging in 2 W or more per one inch. In case the charge is smaller than 2 W, one hour or more charging time is necessary, and the secondary cell of the present invention are not necessary anymore.

Since the very small construction that arranged the secondary cell in the reverse face of the liquid crystal display by the present invention is provided, portability of the system is excellent. In order to realize the longest 40 hours or more of continuous duty, it is necessary to dispose the secondary cell in a volume consisting of a widths of 0.85 to 1.2 per the width of the screen of the liquid crystal display panel, a length of 1.0 to 1.8 per the screen of the liquid crystal display panel, and. a thickness of from 3 mm to 20 mm. In case the secondary cell is larger than the volume, the cell can not be accommodated in the reverse face of the panel with the liquid crystal display and the circuit or the total thickness of the system becomes thicker so that the portability deteriorates.

The liquid crystal display system of the present invention has a premise that it drives at around 5 V, and has a size of 5 inch or less. The system has a potential boosting circuit and the step-down circuit are used. Therefore, in case the lithium secondary batteries are used, they are assembled into the set batteries of 2 series or less and 6 parallels or less. The voltage of the cell at this time is 3.6 V to 7.2 V, and 5 V voltage is obtained by using the voltage boosting circuit and the step-down circuit. When the number is more than 6 parallels, the dispersion of the capacity of the individual cell shortens the cell life due to capacity distribution of the batteries.

In case the nickel - hydrogen secondary batteries are used, a set of 6 parallels or less in 3 to 5 series is assembled. As a result, the cell voltage of 3.6 to 6.0 V is obtained, and 5 V voltage is obtained by using the voltage boosting circuit and the step-down circuit. In case the number is larger than 6 parallels, the dispersion of the capacity of the individual batteries causes distribution to make the life declination of the batteries.

In case the secondary cell of the present invention is used, acceleration is excellent without shortening the running distance of the electric vehicle. In addition, since the charging time can be as short as one hour or less, the system can be charged even on the way of movement. The electric vehicle of the present invention can be charged by rapid charge of one hour or less, and the running distance at a driving speed of 40 km/h by one charge is 250 km or more and the cell weight is 200 kg or less.

If the nickel - cadmium cell and the lead cell are used, the rapid charge of less than one hour is possible, but it is impossible to make the cell weight 200 kg in case the above batteries are used and to make the driving distance at a driving speed of 40 km/h to be 250 km by one charge. The effect of the present invention was evaluated by the electric vehicle of the vehicle weight of 1000 kg or more. Therefore, the running distance of 250 km or more was not achieved by simply lightening the body weight. And, the cell weight is 200 KG or less. The running distance of 250 km or more was not achieved by increasing the cell weight. The electric vehicle that satisfies these values is enabled by using the secondary cell of the present invention.

In the electric vehicle using the secondary cell system with the control part that controls the output operation of these batteries, and the motor driven by the secondary cell and the fuel cell or the solar cell as a power source is provided, wherein the rapid charge of the secondary cell is possible within one hour or less, preferably 30 minutes or less. The running distance of the electric vehicle of which driving speed is 40 km/h is 300 km or more by one discharge from the secondary cell and one generation by the fuel cell and/or the solar cell. The sum of the weight of the secondary cell and the fuel cell and/or the solar cell is 250 kg or less.

A hybrid power source of the combination of the above batteries or cells and an engine can be used. The action of the secondary cell used for the present invention is explained. Several phases that participate in the charge and discharge reaction in the secondary cell of the present invention may exist wherein their discharge capacity or their charge capacity is different, or their expansion coefficient or their coefficient of contraction at the time of charge and discharge is different. Further, the pores formed by dissolution and evaporation may exist. The stress fracturing progresses in these phases by the expansion and shrinkage of the crystals at the time of charge and discharge to generate the cracks. The formation of the cracks brings the increase of the reaction area so as to greatly improve the rapid charge-discharge characteristics. The electrode has many crack initiation sources. One of them is in the phase that participates in charge and discharge. Another is the cracks that occur along grain boundaries. Another is the cracks that occur in the pores. The phase that participates in charge and discharge consists of several phases of which discharge capacity or charge capacity is different respectively, or of which expansion coefficient or coefficient of contraction at the time of charging and discharging is different respectively, The respective phases are formed by the highly ordered material of the high crystallinity. The clear grain boundaries exist between the phases. The large stress accumulates by the expansion and shrinkage at the time of charging and discharging between the phases of high crystallinity. Therefore, the formation of the cracks is easy. But this cracks do not grow to deep cracks or cavities. That is, the dissolution phase that could not dissolve and exist in the particle cores and the deposition phase that does not participate in charge and discharge become pinning points to prevent the proceeding of the cracks.

The reaction area is increased by 2 - 10 times by the formation of the minute cracks, and the charge-transfer reaction in the surface can be smoothly progressed. Because the charge-transfer reaction is the controlling step of the rapid charge and the rapid discharge, the rapid charge and the rapid discharge property can be remarkably improved. There are pores formed by dissolving with acids, alkalis, etc. in the material (primary particle in case of particles) that contributes to the charge and discharge reaction. The above process has an effect to increase the packing density of the material that contributes to the charge and discharge reaction in the electrode. The pores existing in the electrode manufactured by the compression molding of the particles are formed between particles or the attachment (for example, bearing object, etc.). so that the primary particle surface increases the specific surface area. As a result, the capacity of the batteries can be further improved.

Firstly, the particles having pores are different from the cases that the metal powder and the catalyst powder are added, but the specific surface area of the material that participates in the charge and discharge reaction increases the area of the reaction sites. Therefore, the rapid charging and the rapid discharging reaction smoothly progress. The particles having the pores can participate in the reaction sufficiently. Therefore, as compared with the electrode of which surface is processed at high temperatures, etc. after manufacture of the electrode, electric current concentration, etc. can be avoided in the electrode of the present invention so that the life time of the electrode can be prolonged.

Because a larger amount of the electrolyte is held in the pores than that of the conventional electrodes, the charge and discharge reaction can smoothly proceed. The pores are formed by dissolving the dissolution phase by using reagents with high reactivity such as acids, alkalis, oxidizing agents or reducing agents. Unlike pores composed of the voids between particles, an inactive film (for example, insulating film) like usually arising a firm oxidation coat is hard to be formed, and higher reactivity can be expected in the present invention. Formed are the coatings (for example, conductive oxide films ) of which the activity is high and which are not firm like the ordinary oxide film formed in the circumference part surface of the pores. The pore surfaces formed by dissolution of the phase become non-continuous, random arrangement of atoms to form defects and voids, so that the state which is electronically charged to positive or negative can be formed. This may lead to contributing to rise of the activity.

The kinds of the elements that exist in the particle boundaries between the dissolution phase and another phase or the elements that exist in the dissolution phase, the dissolution phase and other phases brings about the large difference in the dissolution speed within a short time, and the composition of the pore surface changes into the active layer that is different from the composition before processing. Therefore, the activity in the pore surface is high. The defects are not mere pores, but they have catalyst layers (a layer that contributes to promote the reaction) to which minute etching was applied to form holes or positive holes of electrons and unstable layers (for example, charged layers) are formed. Therefore, it is not only the capillary action, but the electrolyte is held in the pores by the adsorption with electrons so that the reactants are catalytically activated to increase the rate of reaction.

Like this, the pores is clearly different from the pores that are formed between the particle boundaries of porous electrodes in their reactivity. Because the pores in the present invention are formed by dissolving the dissolution phase (the second phase and deposition phase) using reagents such as acids, alkalis, oxidizing agents and reducing agents, the pores are formed in the surfaces with which the reagents are in contact. For example, the pores exist only in the faces that can be in contact with the electrolyte to form the active reaction sites. Therefore, the components in the undissolved dissolution phase (the second phase and deposition phase) that exist in the inner parts of the particles are left in the cores, and the existence can be easily confirmed by analysis. Since this portion is essentially dissolved, it does not participate in the charge and discharge reaction, and thus its action and capacity are small. Therefore, it is important to optimize the dissolution conditions with reagents so as to decrease the residue as little as possible.

It is desirable that in order to certainly dissolve it, heat is applied from the outside like hot acids or hot alkalis to dissolve certainly. In case electrolytes are acids or alkalis, the undissolved dissolution phase (the second phase and deposition phase) in the dissolution operation is dissolved again with the electrolyte, when being in contact with the electrolyte in the cell. Therefore, the components in the dissolution phase (the second phase and deposition phase) can elute into the electrolyte and can confirm their existence by analyzing the electrolyte.

In case the dissolution is dissolved in the electrolyte, the pores in the particle surfaces of the material that participates in the charge and discharge reaction are damaged by the cell operation, and by being in contact with the electrolyte of that place, the new pores will be formed so that good charging and discharging reaction can be maintained. It is not necessary to make the eluted components to precipitate in another place positively. The effect of the present invention can be obtained by dissolving to form the pores. The components and the reaction products of the electrolyte sometimes remain in the pores.

The new surfaces may be formed by destruction ( split, division, etc.) of the material that participates in the charge and discharge reaction in the electrode at the time of charging and discharging are formed which are in contact with the electrolyte, and the dissolution phase faces the new surfaces that react with the electrolyte to form new pores.

### Brief Description of Drawings

Fig. 1 shows the analytical result of the segregation phase of example 1.

Fig. 2 shows the analytical result after dissolution of the segregation phase of example 1.

Fig. 3 shows the construction of the sealed type cell.

Fig. 4 shows the analytical result of the alloy of comparison example 1.

Fig. 5 shows the analytical result after the dissolution of the alloy of comparison example 1.

Fig. 6 shows the analytical result of the segregation phase of example 2.

Fig. 7 shows the crack formation in example 2.

Fig. 8 illustrates relationship between the ratio and the capacity ratio of the mean diameter at the pore site with respect to the average grain size of alloys of example 7 and comparison examples 7 and 8.

Fig. 9 illustrates relationship between the rate and the capacity ratio with respect to the grain surface area of the pore area of example 8 and comparison examples 9 and 10.

Fig. 10 illustrates relationship between the rate and the capacity ratio with respect to the grain volume of the pore part volume of example 8 and comparison examples 9 and 10.

Fig. 11 shows the example of the guidance system by the voice card of example 19 and comparison example 13.

Fig. 12 shows the construction of the server and the voice card of example 19 and comparison example 13.

Fig. 13 shows the construction of the PC card of example 19 and comparison example 13.

Fig. 14 shows the construction of the curd of example 19 and comparison example 13.

Fig. 15 shows the construction of the TFT circuit substrate of the liquid crystal display system of example 15 and comparison example 14.

Fig. 16 shows the example of the liquid crystal display system of examples 21 - 24.

Fig. 17 shows the volume of the set cell of examples 21 - 24.

Fig. 18 illustrates an example of the power management function of the note personal computer of example 25.

Fig. 19 illustrates an example of the hybrid electric power unit of example 27.

Fig. 20 illustrates an example of the hybrid power source of example 27.

### Best Mode for Carrying Out the Invention

### [Example 1]

As a negative electrode, the Ti_{0.2}Zr_{0.8}Ni_{1.1}Mn_{0.6}V_{0.2}B_{0.03} alloy (metallic alloy for hydrogen storage) was used.

The alloy components were melted at a temperature range between 1100 and 1500 °C and cooled at a cooling speed of 0.01 to 0.5 °C /min., and then annealed for about 2 h at 300 to 900 °C. The obtained alloy was crushed to the particles of an average particle size of 50 microns.

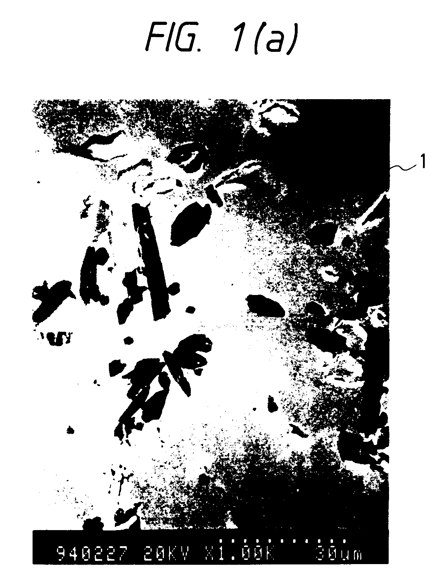

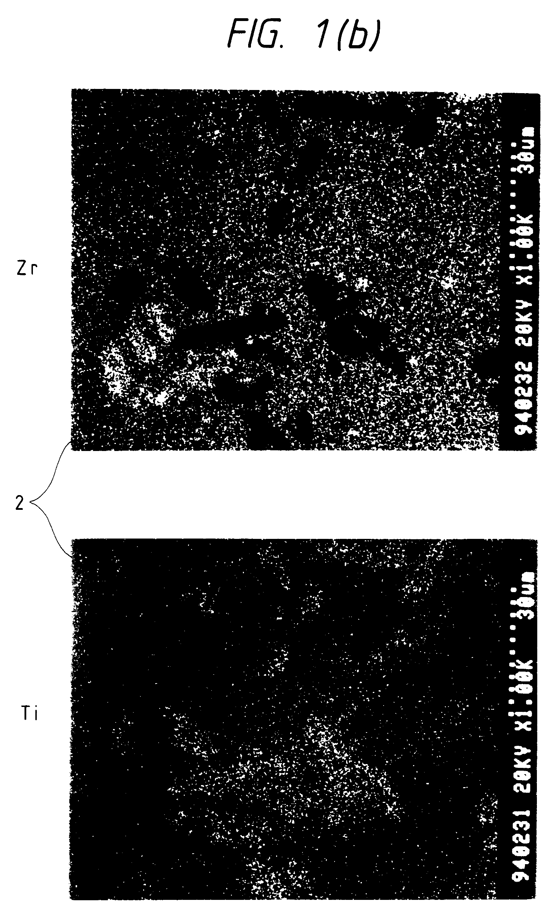

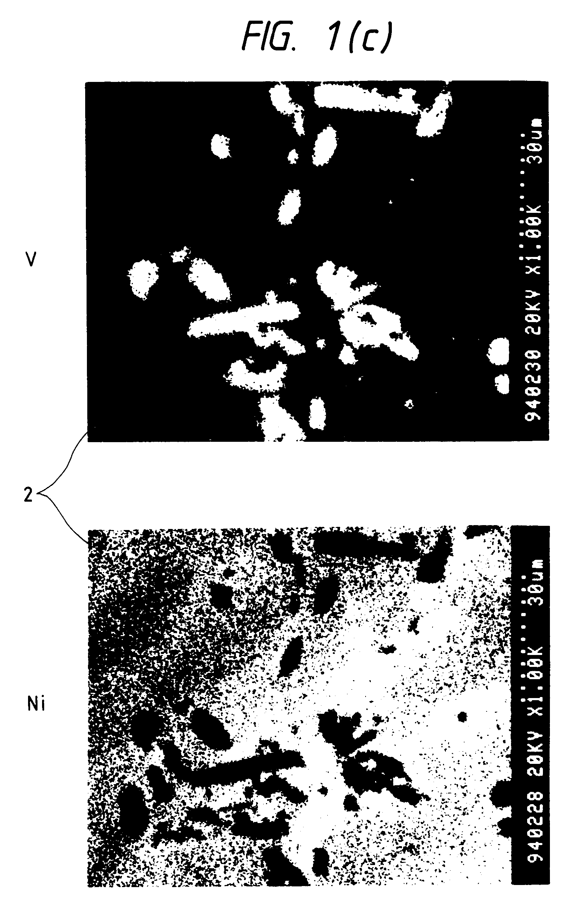

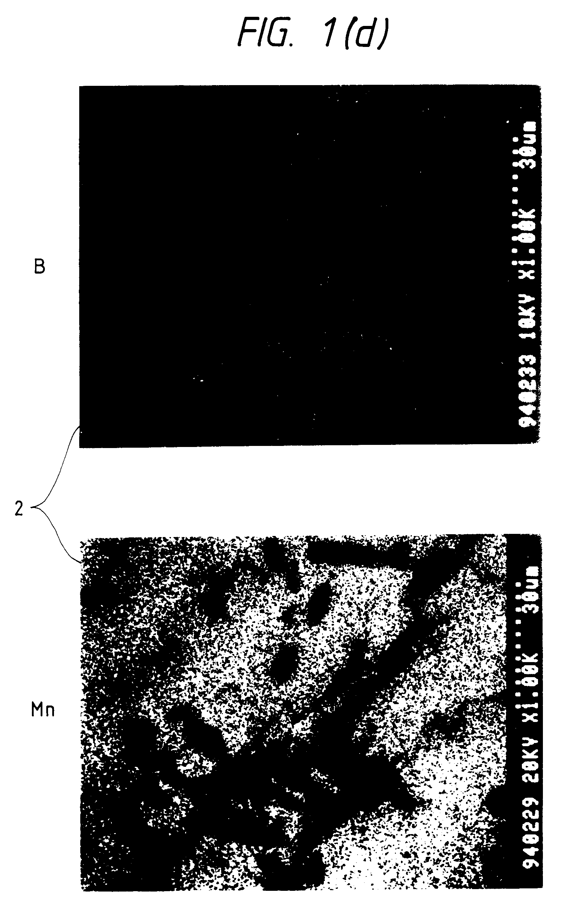

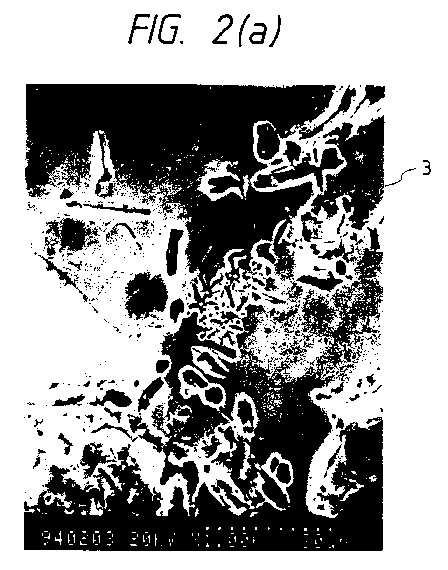

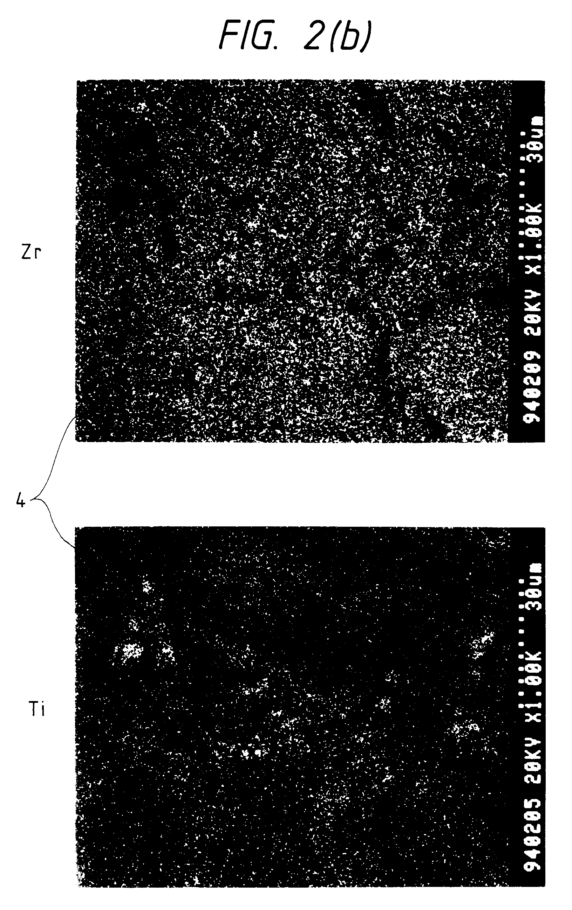

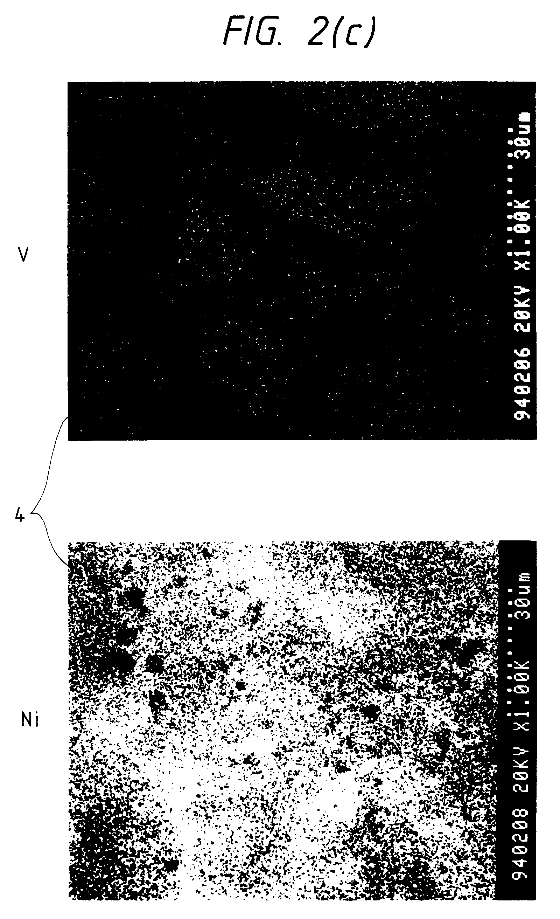

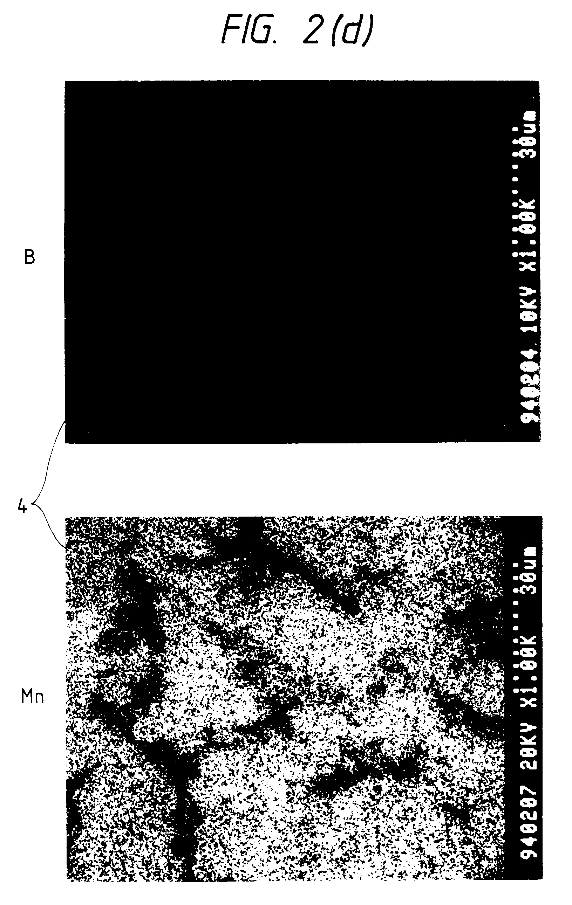

The surface of this alloy was analyzed by using a scanning type electron microscope, i.e. a wavelength dispersion type X-ray analyzer (SEM-WDX) to find out that the segregation phase of V, B and Ti having a mean diameter of 5 microns was formed. Fig. 1 shows the distribution state. This alloy powder was subjected to dissolution treatment with an aqueous solution of 30 wt % KOH, was sufficiently rinsed with water, and the powder was observed with SEM-WDX. The result is shown in Fig. 2.

Observed was the discontinuity of the composition with the circumferential phase formed from the difference in the dissolution velocities of the elements where Ti is left in the pores, but V and B in the segregation phase having a mean diameter of 5 microns were completely dissolved.

The rate of the pores occupying the powder was 15 % of the particle surface area, and was 5 % of the particle volume, respectively. The same result as the treatment with the hot KOH aqueous solution was obtained by reaction and evaporation of the segregation in the atmosphere of chlorine gas or fluorine gas. Hydroxypropylmethylcelurose was added to this as a binding agent, foamed nickel substrate was filled and subjected to roller press to obtain a metal hydride electrode of a specified thickness. The electrode of the paste type using 95 % porosity of foamed nickel for the electrode substrate was used for the nickel electrode.

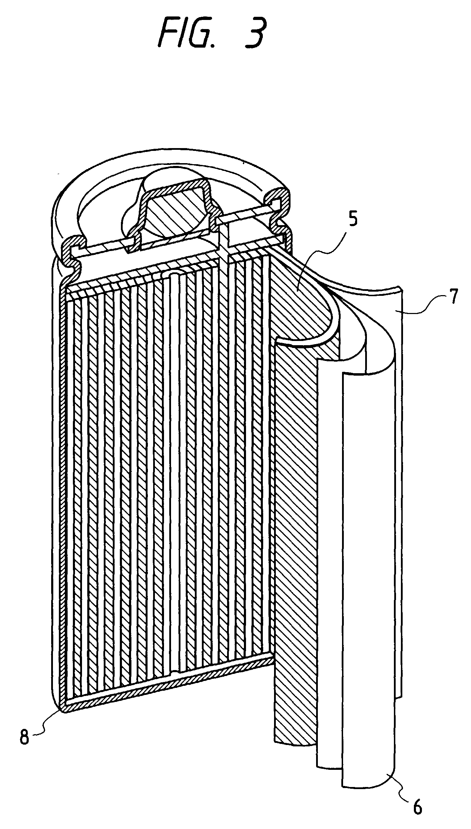

Closed type nickel-metal hydride batteries of the size AA cell type were manufactured by these electrodes. Fig. 3 shows the construction. The positive electrode and negative electrode were manufactured by winding together with the separator of the non-woven cloth made of the polypropylene resin of a thickness of 0.17 mm.

The wound electrodes were disposed in a cell casing. A small quantity of lithium hydroxide was added to an electrolyte of an aqueous solution containing 31 wt % of potassium hydroxide. The cell capacity was designed as 1400 mAh. The cell was charged by 150 % of the capacity in 0.3 CmA to 3 CmA at room temperature. After keeping it for one hour, the cell was discharged until 1.0 V of the end voltage in 0.2 CmA and 3 CmA.

Setting a discharge capacity to 100 wherein the discharge capacity of a cell after charging it at 0.3 CmA and discharging it at 0.2 CmA is measured, a ratio of the discharge capacity of a cell after charging it at 3 CmA and discharging it at 0.2 CmA, and a ratio of the discharge capacity after charging it at 0.3 CmA and discharging at 3 CmA were measured, respectively. The discharge capacity of the cell was 1450 mAh at the 0.2 CmA discharge after the charge at 0.3 CmA, and the cycle life of the cell was 520 times.

When the cell is charged at 0.3 CmA, and is fast discharged at 3 CmA, a discharge capacity of 95% was obtained. When the cell is charged at 3 CmA, and is discharged at 0.2 CmA, a discharge capacity of 95% of the full discharge capacity (1450 mAh) was obtained. This cell was able to discharge for 15 minutes or more at the output of 580 W/l, and was able to discharge at the 200 W/l by 90 % or more of the discharge capacity when charged at 300 W/l.

### (Comparative example 1)

As a negative electrode, the hydrogen storage metallic alloy (Ti_{0.2}Zr_{0.8}Ni_{1.1}Mn_{0.6}V_{0.2} alloy) was used. The alloy components were melted at a temperature between 1100 and 1500 °C and was subjected to homogeneous treatment for 3 to 10 h at 1050 °C in argon gas atmosphere.

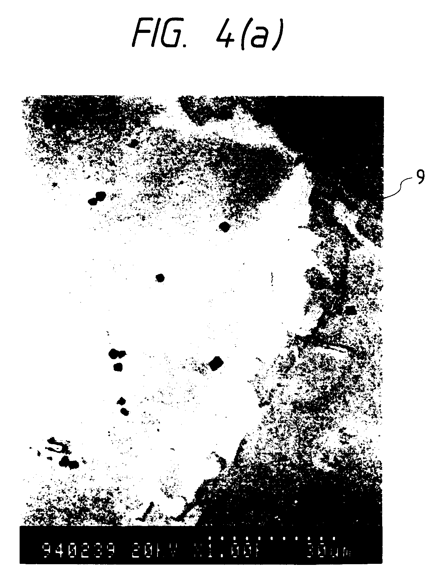

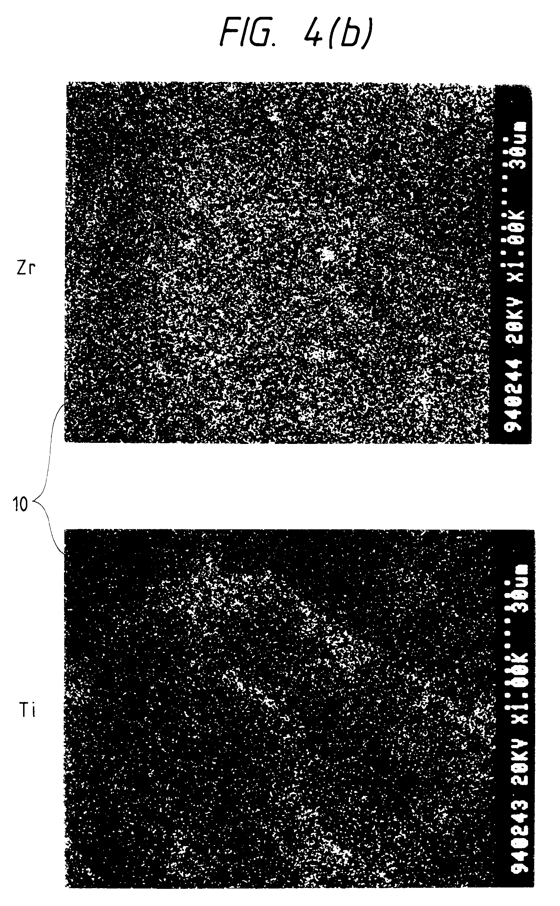

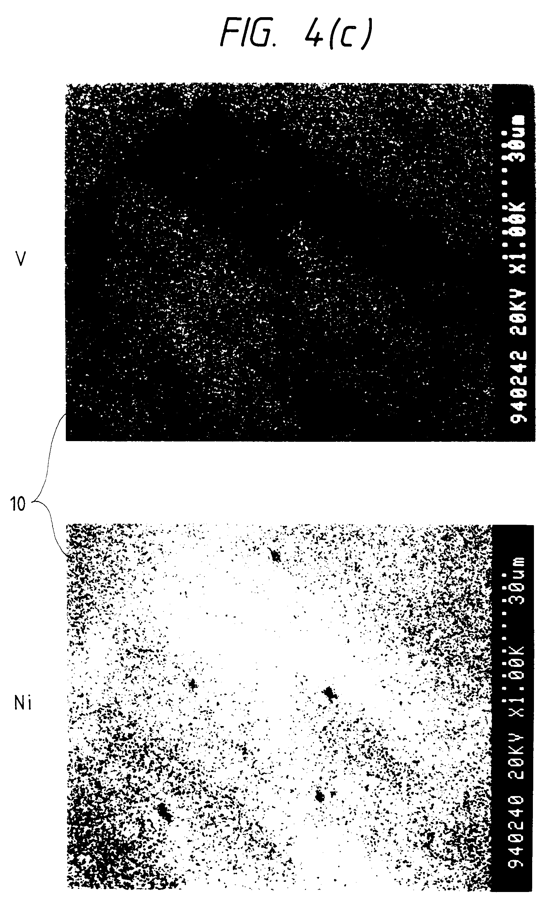

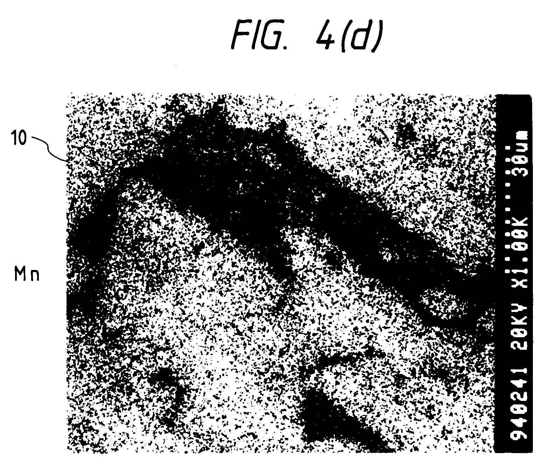

The alloy was crushed to particles of an average particle size of 50 micron. The surface of this alloy was analyzed by using SEM-WDX. While the second phase of the Ti and Ni was formed, the segregation phase was not detected. Fig. 4 shows the distribution state. The dissolution was attempted in the same condition as example 1.

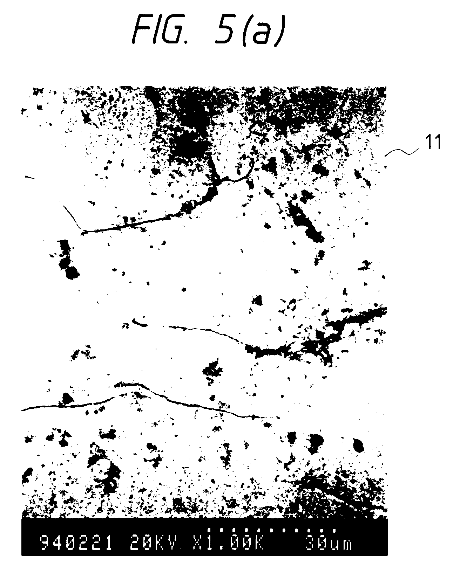

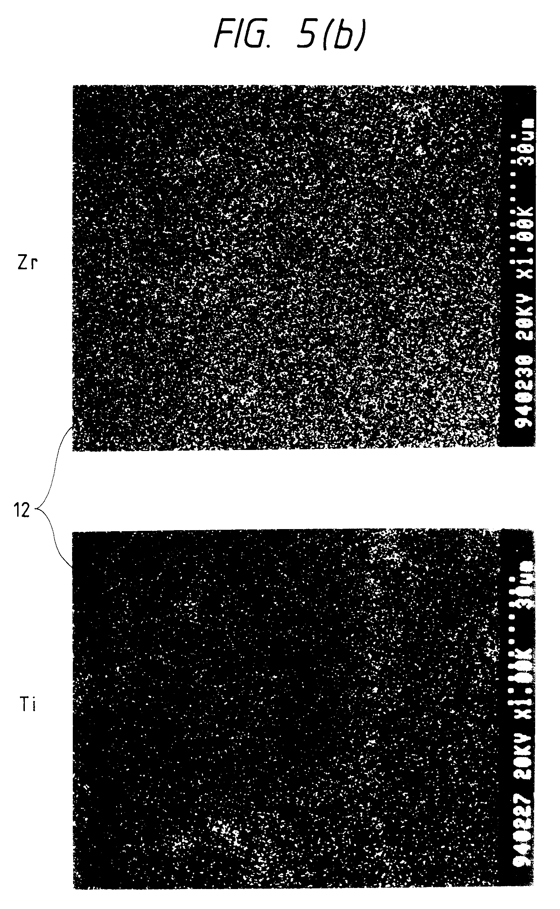

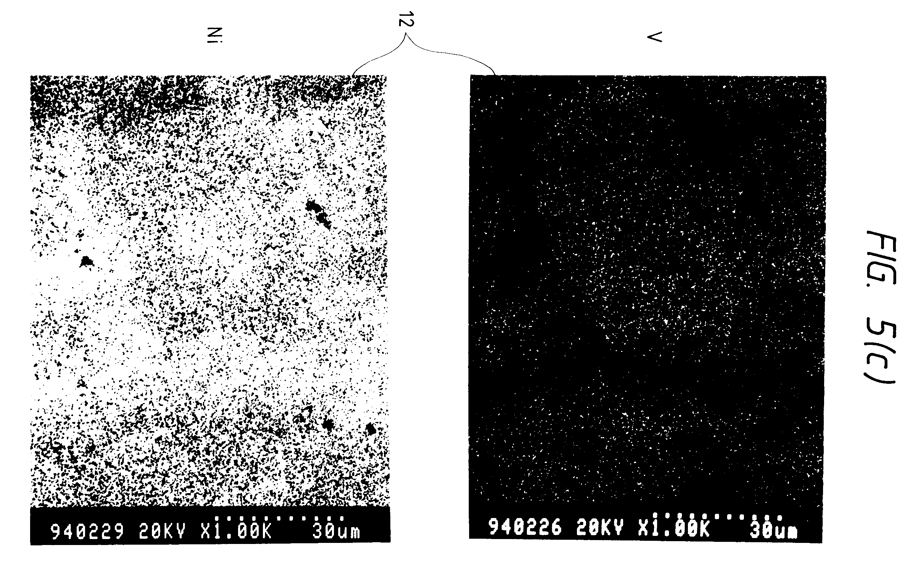

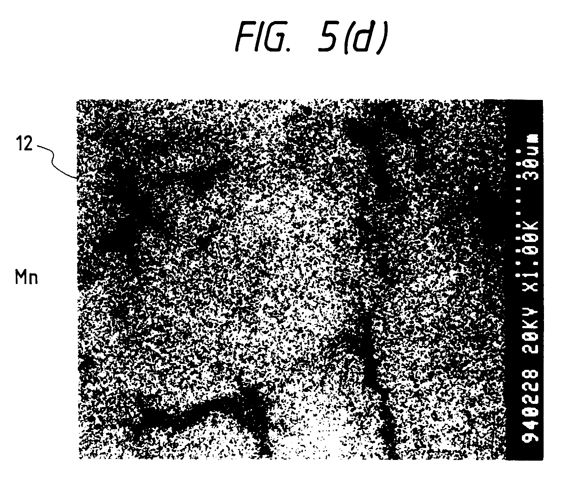

Fig. 5 shows that there was not appearance of the pores by the dissolution. Similarly with example 1, an electrode was manufactured. The closed type nickel-metal hydride cell of the size AA cell type was manufactured, and the discharge capacity of the cell was measured. The discharge capacity of the cell was 1410 mAh when it discharges at 0.2 CmA after charge at 0.3 CmA, and the cycle life was only 380 times. The discharge capacity of the cell was 45 % at the time of 3 CmA discharge and was 56 % at the discharge capacity at 3 CmA.

### (Comparative example 2)

As a negative electrode, the metallic alloy for hydrogen storage Ti_{0.2}Zr_{0.8}Ni_{1.1}Mn_{0.6}V_{0.2} was used. As same as comparative example 1, the alloy powder of 50 micron average particle size was manufactured. The hydroxypropylmethylcelurose was added to the powder as a binding agent to fill the foamed nickel substrate, and it was molded to a specified thickness by the roller press while applying a pressure. 100 Microns holes were opened on both sides of the molded body at a rate of 100 / cm² to this molded body, and the electrode was prepared.

Similarly with example 1, the closed type nickel-metal hydride cell of the size AA cell type was manufactured, and its discharge capacity was measured. The discharge capacity at 0.2 CmA after the charge at 0.3 CmA was 1250 mAh, and the cycle life was only 325 times. The discharge capacity at 3 CmA was 72 %, and the charge capacity at 3 CmA was 70 %.

### (Comparative example 3)

As a negative electrode, the metallic alloy for hydrogen storage Ti0.2Zr0.8Ni1.1Mn0.6V0.2 was used. It was done to the similarity with comparative example 1, and the alloy grain of 50 micron average grain size was manufactured. The hydroxypropylmethylcelurose as a binding agent and lane nickel catalyst powder was added to the powder. The mixture was filled in the foamed nickel substrate, and it was pressure-molded to a specified thickness by the roller press. Similarly with example 1, the closed type nickel-metal hydride cell of the size AA cell type was manufactured, and the discharge capacity was measured. The discharge capacity at 0.2 CmA after the charge at the 0.3 CmA was 1350 mAh, and the cycle life was 383 times. It was 72 % at the discharge of 3 CmA and 68 % capacity in the charge in the 3 C m mA.

### [Example 2]

The metallic alloy for hydrogen storage Ti_{0.2}Zr_{0.8}Ni_{1.1}Mn_{0.6}V_{0.2}B_{0.03} was used as a negative electrode. This alloy was melted at a temperature between 1100 and 1500 °C, and the alloy was subjected to homogeneous treatment for 3 to 10 h at 800 °C in the argon gas atmosphere.

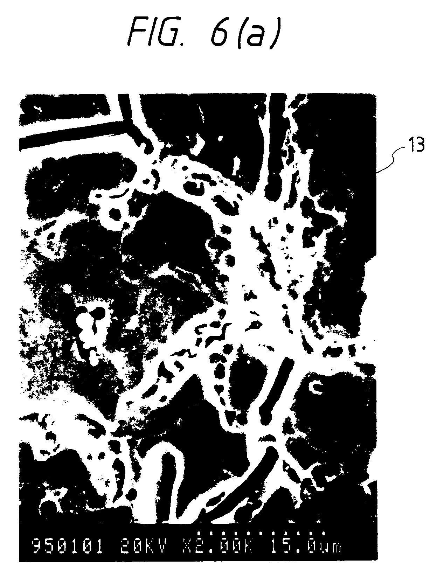

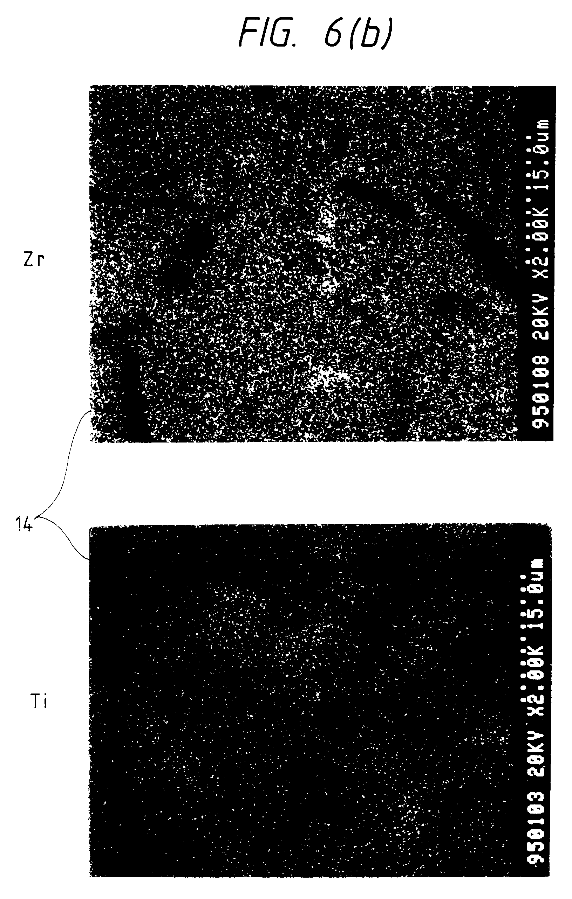

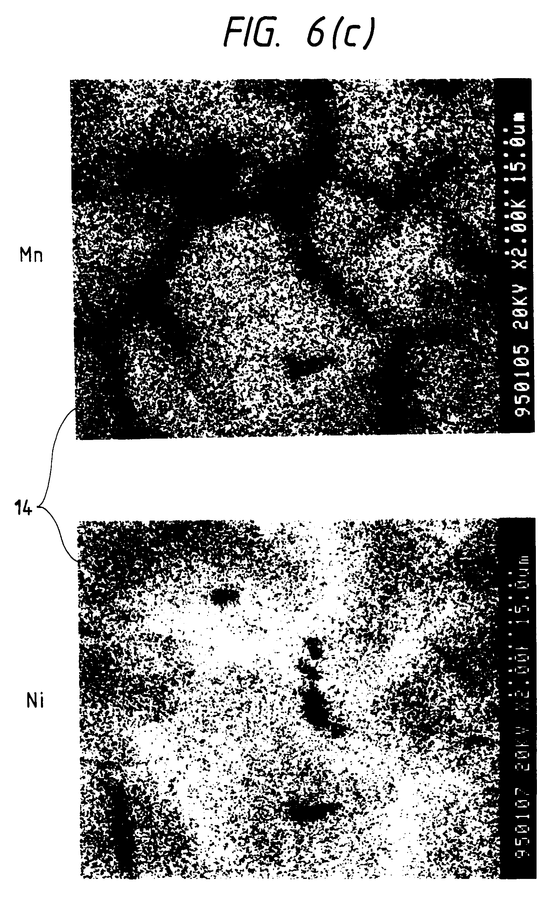

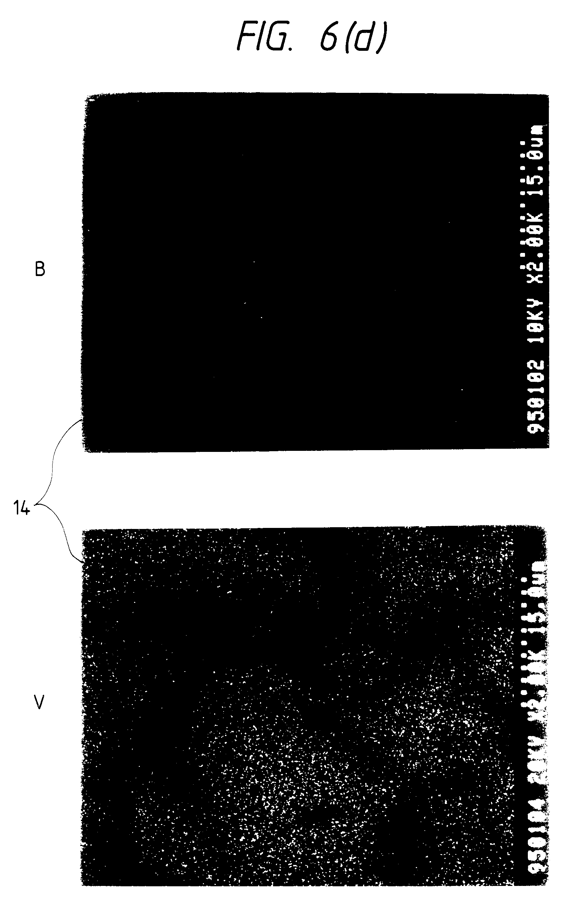

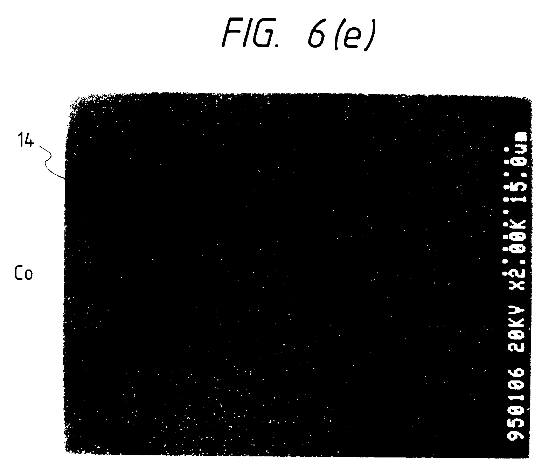

The alloy was crushed to the particles with an average particle of 50 microns. When analyzing the surface of this alloy by using SEM-WDX, 4 kinds of segregation phases were observed. Fig. 6 shows the distribution state. There were 4 kinds of segregation phases of Zr precipitate, TiNi, Ti₂Ni and B, V and Ti. The discharge capacities of TiNi and Ti₂Ni are 150 mAh/g and 200 mAh/g, respectively. The discharge capacity of the mother phase of Ti_{0.2}Zr_{0.8}Ni_{1.1}Mn_{0.6}V_{0.2} was 330 mAh/g. The discharge capacity ratio of (mother phase) /(TiNi) was 2.2, and the discharge capacity ratio of (mother phase) / (TiNi) was 1.65, respectively.

Expansion coefficients of lattice volume after charging that were obtained from the measurement of the x-ray diffraction of TiNi, Ti₂Ni and the mother phase (Ti_{0.2}Zr_{0.8}Ni_{1.1}Mn_{0.6}V_{0.2}) were 10%, 18 %, 2 and 22 %, respectively. The ratio of the expansion coefficients of ( mother phase) /(TiNi) was 2.2, and the ratio of expansion coefficients of ( mother phase )/ Ti2Ni was 1.22.

After subjecting the alloy to dissolution for 2 h at 70 °C with a mixed solution consisting of (30 wt % KOH aqueous solutions and aqueous solution of 1 wt % NaBH₄) and (aqueous solution of 5 wt % CH₃COOH), this alloy was sufficiently rinsed with water.

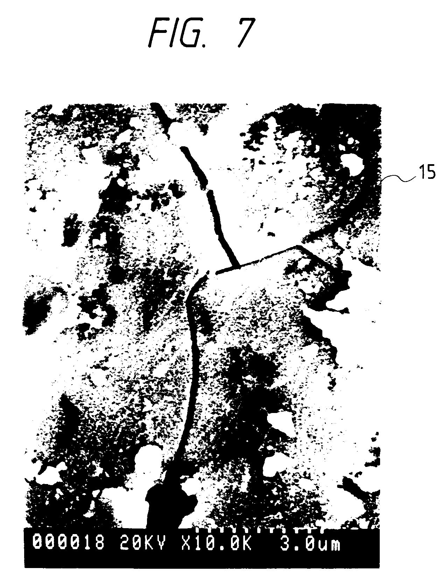

V and B were dissolved completely in the segregation phase of B, V and Ti of 1 micron mean diameter, and Ti remained in the pores. The discontinuity of composition from the circumferential phases that arises from the difference in solubility speed due to elements was observed. In addition, as shown in Fig. 7, when observing the alloy grains with SEM, several fine cracks were observed in the grains.

The rate of the pores occupies 5 % of the grain surface area and 0.2% of the grain volume. Similarly with example 1, the electrode was manufactured and the closed type nickel-metal hydride cell of the size AA battery type was manufactured, and then the discharge capacity was measured. The discharge capacity under discharge at 0.2 CmA after the charge at 0.3 CmA was 1470 mAh, and the cycle life was 550 times.

A discharge capacity under discharge at 3 CmA was 95 % and a discharge capacity under charge at 3 CmA was 90 %. The cell was possible to discharge for 15 minutes at 580 W/l.

### (Comparative example 4)

As a negative electrode, the metallic alloy for hydrogen storage (Ti_{0.2}Zr_{0.8}Ni_{1.1}Mn_{0.6}V_{0.2}) was used. The alloy elements were melted at a temperature between 1100 and 1500 °C and cooled at the cooling rate of 100 °C/sec. When analyzing the surface of this alloy by using SEM-WDX, 4 kinds of segregation phases were observed. There were 4 kinds of segregation phases of the Zr deposits,i.e. Ti and Ni, V and Ti and V deposition phase.

The observation by X-ray diffraction and TEM-EPMA of minute portions revealed that the segregation phases consisting of Ti and Ni and V and Ti were the phases from amorphous state to microcrystals, which are very low in crystallinity. This alloy was crushed to the grain of 50 microns average grain size. Likewise with example 1, the closed type nickel-metal hydride cell of the size AA battery type was manufactured, and the discharge capacity was measured.

The discharge capacity at the time of discharge at 0.2 CmA after the charge at 0.3 CmA was 1150 mAh, and the cycle life was 383 times. The discharge capacity at the time of discharge at 3 CmA was 72 % and was 68 % at the time of charging at 3 CmA.

### [Example 3]

The graphite powder which is carbon material was used as a negative electrode. The average grain size of the graphite powder was 0.1 micron or less, and 0.2 weight % of copper powder of 0.01 micron was added to this graphite powder and the mixture was heat-treated for 5 h at 3000 °C under mixing. Then, the graphite powder was crushed to obtain desired powder. After subjecting this to dissolution treatment for 2 h at 70 °C in nitric acid aqueous solution and rinsing in water, the powder was analyzed by using SEM-WDX. The pores of 0.01 to 0.05 micron average grain size and trace of the copper were confirmed.

In other than the dissolution processing in the hot KOH aqueous solution, the same result was obtained by reacting the deposit phases, thereby to evaporate in the stream of chlorine gas or fluorine gas to form the deposition phase. The fluorine containing binder was added to the graphite powder, and it was coated on the copper foil. The coating and the copper foil were molded by the roller press to obtain the carbon electrode of the predetermined thickness.

The electrode in which LiCoO₂ is the principal component was used as a positive electrode. By using these electrodes, the closed type lithium cell of the size AA battery type was manufactured to measure its discharge capacity. The battery capacity was designed as 600 mAh. The discharge capacity under the discharge at 0.2 CmA after the charge at 0.3 CmA was 650 mAh, and the cycle life was 520 times. 92 % of discharge at the discharge of 3 CmA and 89 % of discharge capacity at the charge of 3 CmA were obtained. And, 15 minutes or more of discharge at the output of 580 W/l was possible.

### (Comparative example 5)

The graphite powder was used as a negative electrode. The average grain size of the graphite powder was 0.1 micron or less. The graphite powder was heat-treated for 5 h at 3000 °C under mixing. The surface of the graphite powder was analyzed by using SEM-WDX. While dissolution processing was done in the same condition as example 2, the pores were not observed.

The fluorine containing binder was added to the graphite powder, and was applied on the copper foil. Then, the coating and the copper foil were molded by the roller press to obtain the carbon electrode of the predetermined thickness. The electrode of which principal component is LiCoO₂ was used as a positive electrode. By using these electrodes, the closed type lithium cell of the size AA battery type was manufactured, and the discharge capacity was measured.

The battery capacity was designed as 600 mAh. The discharge capacity at discharge of 0.2 CmA after the charge at 0.3 CmA was 550 mAh, and the cycle life was 420 times. 72 % of discharge capacity at the discharge of 3 CmA and 69 % of discharge capacity at the charge of 3 CmA were obtained.

### [Example 4]

The graphite powder was used as a negative electrode. The average grain size of the graphite powder is 0.1 micron or less, and 0.2 weight % of the copper powder of 0.01 micron grain size was added to the graphite powder, and then the mixture was heat-treated for 5 h at 3000 °C under mixing. The mixture was crushed, and the grain of the present invention was obtained. 0.2 weight % of silver powder having a particle size of 0.01 micron was mixed with the graphite powder by the ball mill under the condition of 250 rpm.

By the mixed solution of 2 wt % formal in aqueous solutions and 5 wt % of aqueous ammonia solutions, the mixture was subjected to dissolution treatment for 2 h at 60 °C. It was confirmed by SEM-WDX that there were the pores of 0.01 to 0.05 micron average grain size, a trace of copper and deposit of silver.

The fluorine containing binder was added to the mixture, it was applied on the copper foil. The coating and the copper foil were molded by the roller press to obtain the carbon electrode of the predetermined thickness. The electrode of which principal component is LiCoO₂ was used as a positive electrode. By using these electrodes, the closed type lithium cell of the size AA battery type was manufactured, and the discharge capacity was measured. The battery capacity was designed as 600 mAh. The discharge capacity at discharge of 0.2 CmA after the charge at 0.3 CmA was 680 mAh, and the cycle life was 570 times. 94 % of discharge capacity at the discharge of 3 CmA, and 91 % of discharge capacity was obtained at the charge of 3 CmA, and 15 minutes or more of discharge at 580 W/l was possible.

When disassembling the cell and observing the carbon grain by SEM, several fine cracks were observed in the silver grain. From the measurement by X-ray diffraction result, the peak of LiAg was observed. The expansion coefficient of Ag at this time was 18 %, and the expansion coefficient of the carbon was 25 %. The discharge capacity of Ag alone was 150 mAh/g, and the discharge capacity of carbon of the mother phase was 370 mAh/g. The discharge capacity ratio of (mother phase) /(Ag) was 2.47. The ratio of the expansion coefficients of the lattice volumes after charging of (mother phase) /(Ag) obtained by the measurement by X-ray diffraction was 1.39.

### [Example 5]

The lithium-cobalt oxide was used as a positive electrode. This was crushed to the oxide of 1 micron or less average grain size. 0.2 Weight % of Al powder having 0.1 micron grain size was added to the oxide powder and the mixture was heat-treated for 5 h at 300 °C under mixing. This mixture was crushed to obtain of the desired powder. After subjecting the powder to dissolution treatment with the aqueous solution of KOH at 2 h for 70 °C, the powder was rinsed with water, and then it was analyzed by using SEM-WDX. It was confirmed that the particles had the pores of the average grain size 0.2 micron.

The deposition phase was reacted in the flow of chlorine gas or fluorine gas to evaporate it, and the same result as mentioned above was obtained. The fluorine containing binder was added to this, and the mixture was applied on Al foil, and the electrode of the predetermined thickness was obtained by the roller press.

As a negative electrode, the carbon negative electrode was used. The closed type lithium cell of the size AA battery type was manufactured by using these electrodes, and its discharge capacity was measured. The battery capacity was designed as 600 mAh. The discharge capacity at discharge of 0.2 CmA after the charge at 0.3 CmA was 710 mAh, and the cycle life was 580 times. 85 % of discharge capacity at the discharge of 3 CmA, and 80 % of discharge capacity in the charge of 3 CmA were obtained, and 15 minutes or more discharge at an output of 580 W/l was possible.

### (Comparative example 6)

The lithium - cobalt oxide was used as a positive electrode. The oxide was crushed to the grain of 1 micron or less average grain size and was heat-treated for 5 h at 300 °C under mixing. While dissolution processing was done in the same condition as example 3, the pores were not formed when this surface was analyzed by using SEM-WDX.

The fluorine containing binder was added to this powder, and the mixture was applied on the Al foil and was molded by the roller press to manufacture the carbon electrode of the predetermined thickness. As a negative electrode, the carbon negative electrode was used. The closed type lithium cell of the size AA battery type was manufactured by using these electrodes, and the discharge capacity was measured. The discharge capacity of the cell at the time of discharge of 0.2 CmA after the charge of 0.3 CmA was 570 mAh, and the cycle life was 380 times. 65 % of discharge capacity at the discharge of 3 CmA and 57 % of discharge capacity of charge of 3 CmA were obtained.

### [Example 6]

The lithium-cobalt oxide was used as a positive electrode. This was crushed to the powder of 1 micron or less average grain size. 2 Weight % of 0.1 micron Al powder and 2 wt % of V powder were added to the powder and heat-treated for 15 h at 370 °C under mixing. Then the mixture was crushed to obtain the grain of the desired particle size. After subjecting this to the dissolution for 1 h at 70 °C in a 15 wt % KOH aqueous solutions and rinsing it with water, the powder was processed for 1 hour at 40 °C in the mixture solvent of ethylenecarbonate and dimethoxyethane. It was analyzed by using SEM-WDX that the deposit of V, the pores of the average grain size of 0.1 micron, the trace of Al and the mother phase of LiCo_{1-X}VxO₂(x=0 to 0.5) were formed.

The fluorine containing binder was added to this, and was applied on the Al foil. The coating and the copper foil were molded by the roller press to obtain the electrode of the predetermined thickness. As a negative electrode, the carbon negative electrode was used. The closed type lithium cell of the size AA battery type was manufactured by using these electrodes, and the discharge capacity was measured. The battery capacity was designed as 600 mAh. The discharge capacity at discharge of 0.2 CmA after the charge of 0.3 CmA was 750 mAh, and the cycle life was 640 times. 88 % of discharge capacity at discharge of 3 CmA, and 85 % of discharge capacity at charge of 3 CmA were obtained, and 15 minutes or more of discharge at the output of 580 W/l was possible. When disassembling the cell and doing the SEM observation of the grain, several fine cracks were observed in the V deposition grain, and from the measurement by X-ray diffraction result, the peak of LixVyO₂ was observed.

The expansion coefficient of the V deposit at this time was 14 %, and the expansion coefficient of the mother phase was 20 %. The discharge capacity of the LixVyO₂ by itself was 50 mAh/g, and the discharge capacity of the mother phase was 150 mAh/g. The discharge capacity ratio of (mother phase) /(LiₓV_{y}O₂) is 3.0. The ratio of the expansion coefficient of the lattice volumes of (mother phase) /(LiₓV_{y}O₂) after the charge obtained from the measurement by X-ray diffraction) is 1.43.

### [Example 7]

A hydrogen storage alloy (Ti_{0.2}Zr_{0.8}Ni_{1.1}Mn_{0.6}V_{0.2}) was used as a negative electrode. 0.01 from 0.1 in the atom ratio of boron having the average grain size of 10 to 0.1 micron was added to the alloy to produce an alloy in the same manner as in example 1.

The alloy was crushed to the grain of 50 micron average grain size. As same as in example 1, the pores were formed. The average size of the pores was 25 to 0.4 microns (1/2 to 1/150 of the average grain size of the alloy). In the same manner as in example 1, the electrode was manufactured to assemble the closed type nickel-metal hydride cell of the size AA battery type was manufactured, and the discharge capacity was measured. As same as example 1, the electrode was manufactured, the closed mold nickel-metal hydride cell of the size AA battery type was manufactured, and the discharge capacity was measured.

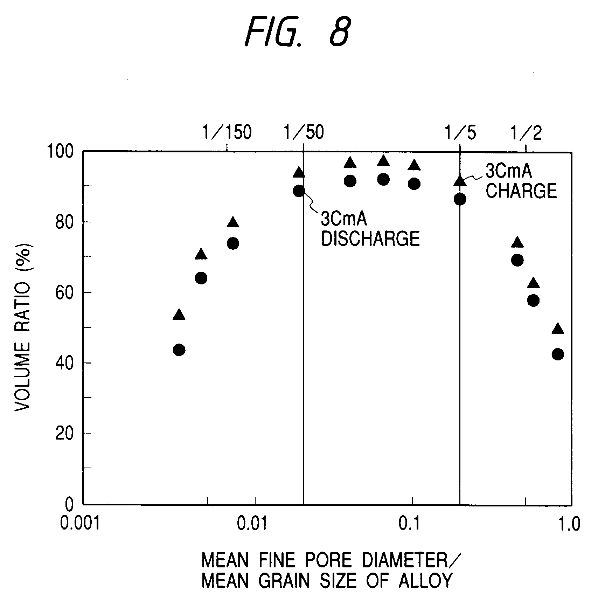

Fig. 8 shows relationship between the average grain size of the pores and the ration of the discharge capacity at the charge of 3 CmA against the discharge capacity of 3 CmA. The discharge capacity of discharge at 0.2 CmA after the charge of 0.3 CmA was 1100 to 920 mAh, and the cycle life was 680 to 500 times. The discharge capacity of the cell was 95 to 75 % at discharge of 3 CmA, and the discharge capacity at discharge of charge of 3 CmA was 98 to 75%. This cell was possible to discharge for 15 minutes or more at an output of 580 W/l. The mean diameter of the pores was 1/5 to 5/50 of the average grain size of the alloy, and the cell had the large discharge capacity.

### (Comparative example 7)

The metallic alloy for hydrogen storage (Ti_{0.2}Z_{0.8}Ni_{1.1}Mn_{0.6}V_{0.2}) was used as a negative electrode. An atomic ratio of 0.1 of boron powder having 0.05 micron average grain size was added to this alloy, and likewise with example 1, an alloy was manufactured. The alloy was crushed to the grain of 50 micron average grain size. As same as in example 1, the pores were was formed in the electrode. The mean diameter of the pores was 0.3 microns or less ( smaller than 1/150 of the average grain size of the alloy).

As same as in example 1, the electrode was manufactured, and a closed type nickel-metal hydride cell of the size AA battery type was manufactured to measure the discharge capacity.

Fig. 8 shows the relation between the mean diameter of the pores and the capacity ratio of the discharge capacity at the charge of 3 CmA to that at the discharge of 3 CmA. The discharge capacity at discharge of 0.2 CmA after the charge of 0.3 CmA was 950 to 910 mAh, and the cycle life was 520 to 480 times. But, the discharge capacity at the discharge of 3 CmA was 45 to 65 % and the discharge at the charge of 3 CmA was 55 to 68%.

### (Comparative example 8)

The hydrogen storage alloy (Ti_{0.2}Zr_{0.8}Ni_{1.1}Mn_{0.6}V_{0.2}) was used as a negative electrode. An atomic ratio of 0.1 of boron of 15 microns average grain size was added to the alloy. As same as in example 1, the alloy was manufactured. The alloy was crushed to the grain of 50 microns average grain size.

Likewise with example 1, the pores were formed in the alloy. The mean diameter of the pores was 30 microns or more ( larger than 1/2 of the mean grain size of the alloy). Likewise with example 1, the electrode was manufactured, and the closed type nickel-metal hydride cell of the size AA battery type was manufactured to measure the discharge capacity.

Fig. 8 shows relationship between the mean diameter of the pores and the ratio of discharge capacity at charge of 3 CmA against the discharge capacity of the discharge of 3 CmA. The discharge capacity at discharge of 0.2 CmA after the charge of 0.3 CmA was 970 to 920 mAh, and the cycle life was 500 to 450 times. The discharge capacity at the discharge of 3 CmA was 45 to 63 %, and the discharge capacity at the charge of 3 CmA was 66 to 48%.

### [Example 8]

A hydrogen storage alloy (Ti_{0.2}Zr_{0.8}Ni_{1.1}Mn_{0.6}V_{0.2}Bₓ (x = 0.01 to 0.8) was used as a negative electrode, and the pores were formed in the alloy, as same as in example 1. The rate of the pores was 5 to 80 % to the grain surface, and the rate of grain volume was 0.2 to 60%, respectively. Likewise with example 1, the electrode was manufactured, and the closed type nickel-metal hydride cell of the size AA battery type was manufactured to measure the discharge capacity.

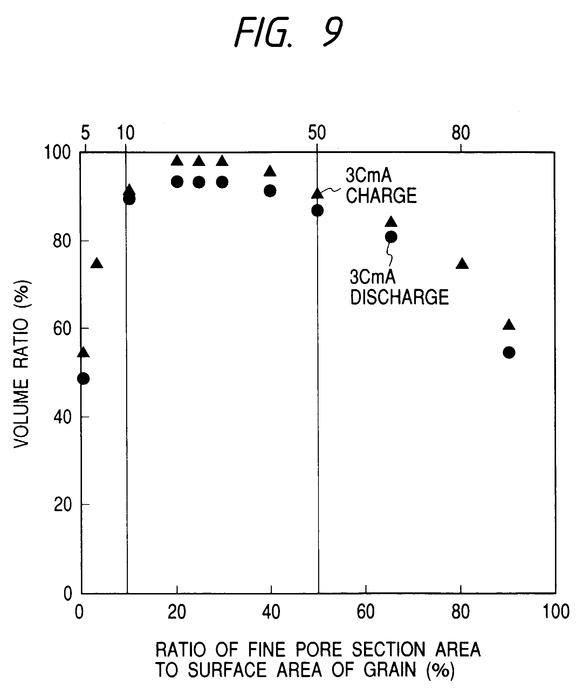

Fig. 9 shows relationship between the rate of the sectional area of the pores against the grain surface area and the ratio of the discharge capacity at charge of CmA with respect to the discharge capacity at discharge of 3 CmA.

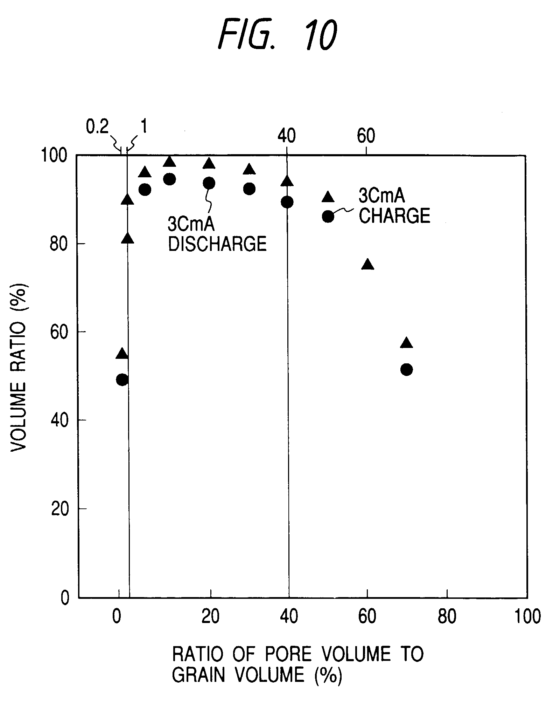

Fig. 10 shows relationship between the rate of the volume of the pores against the grain volume and the ratio of the capacity at charge of 3 CmA against the discharge capacity of 3 CmA. The capacity at discharge of 0.2 CmA after the charge of 0.3 CmA was 1550 to 1420 mAh, and the cycle life was 580 to 430 times. 95 to 75 % of discharge capacity was obtained at the discharge of 3 CmA, and 98 to 75 % of discharge capacity was obtained at the charge of 3 CmA.

When the rate of the pore surface to the grain surface area is 10 to 50 % or when the rate of the pore volume to the grain volume was 1 to 40 %, the discharge capacity was especially large.

### (Comparative example 9)

The hydrogen storage alloy (Ti_{0.2}Zr_{0.8}Ni_{1.1}Mn_{0.6}V_{0.2}Bₓ (x = 0.001 to 0.005,) was used as a negative electrode. Likewise with example 1, the pores were formed in the alloy. The rate of the pore area to the grain surface area was 0.3 %, and the rate of the pore volume to the grain volume was 0.1 %. By using this material, as same as in example 1, the electrode was manufactured. The closed type nickel-metal hydride cell of the size AA battery type was manufactured to measure the discharge capacity.

Fig. 9 shows relationship between the rate of the sectional area of the pores to the grain surface area and the ration of the discharge capacity at charge of 3 CmA to the discharge capacity of 3 CmA.

Fig. 10 shows relationship between the rate of the pore volume to the grain volume and the ratio of the discharge capacity at the discharge of 3 CmA to the charge capacity of 3 CmA. The capacity at discharge of 0.2 CmA after the charge of 0.3 CmA was 1400 mAh, and the cycle life was 320 times. 50 % of discharge capacity at the discharge of 3 CmA and 55 % of discharge capacity at the charge of 3 CmA were obtained.

### (Comparative example 10)

The hydrogen storage alloy (Ti_{0.2}Zr_{0.8}Ni_{1.1}Mn_{0.6}V_{0.2}Bₓ (x = 1.0 to 1.8) was used as a negative electrode. As same as in example 1, the pores were formed in the alloy. The rate of the sectional area of the pores to the grain surface area was 90 %, and the rate of the pore volume to the grain volume was 70 %. Using this material, as same as in example 1, the electrode was manufactured, and the closed type nickel-metal hydride cell of the size AA battery type was manufactured to measure the discharge capacity.

Fig. 9 shows relationship between the rate of the pore sectional area to the grain surface area and the ratio of the discharge capacity at 3 CmA charge to the capacity of 3 CmA discharge.

Fig. 10 shows relationship between the rate of the pore volume to the grain volume and the ratio of discharge capacity of 3 CmA to the discharge of 3 CmA. The capacity at discharge of 0.2 CmA after the charge of 0.3 CmA was 1120 mAh, and the cycle life was 300 times. 55 % of discharge capacity at the discharge of 3 CmA and 60 % of discharge capacity at the charge of 3 CmA were obtained.

### [Example 9]

The hydrogen storage alloys of which compositions are shown in Table 1 were used as negative electrodes. The segregation phases was formed in the alloys. The quantities of Al, V , Mn, Sn, B, Mg, Mo, W, Zr, K, Na, Li , Ni and Ti contained in the segregation phases was 30 weight % or more.

The phases were subjected to the dissolution treatment for 1 h at 50 °C with the aqueous solution containing an acids, alkalis, oxidizing agents and reducing agents. After washing the alloys in water, as same as in example 1, the electrodes were manufactured to assemble the closed type nickel-metal hydride cell of the size AA battery type. The discharge capacity of the cells was measured.

Table 1 shows the results. The discharge capacity at discharge of 0.2 CmA after the charge of 0.3 CmA was 1510 to 1400 mAh, and the cycle life of the cells was 550 to 480 times. 95 to 78 % of discharge capacity at the discharge of 3 CmA and 98 to 88 % of discharge capacity at the charge of 3 CmA were obtained.

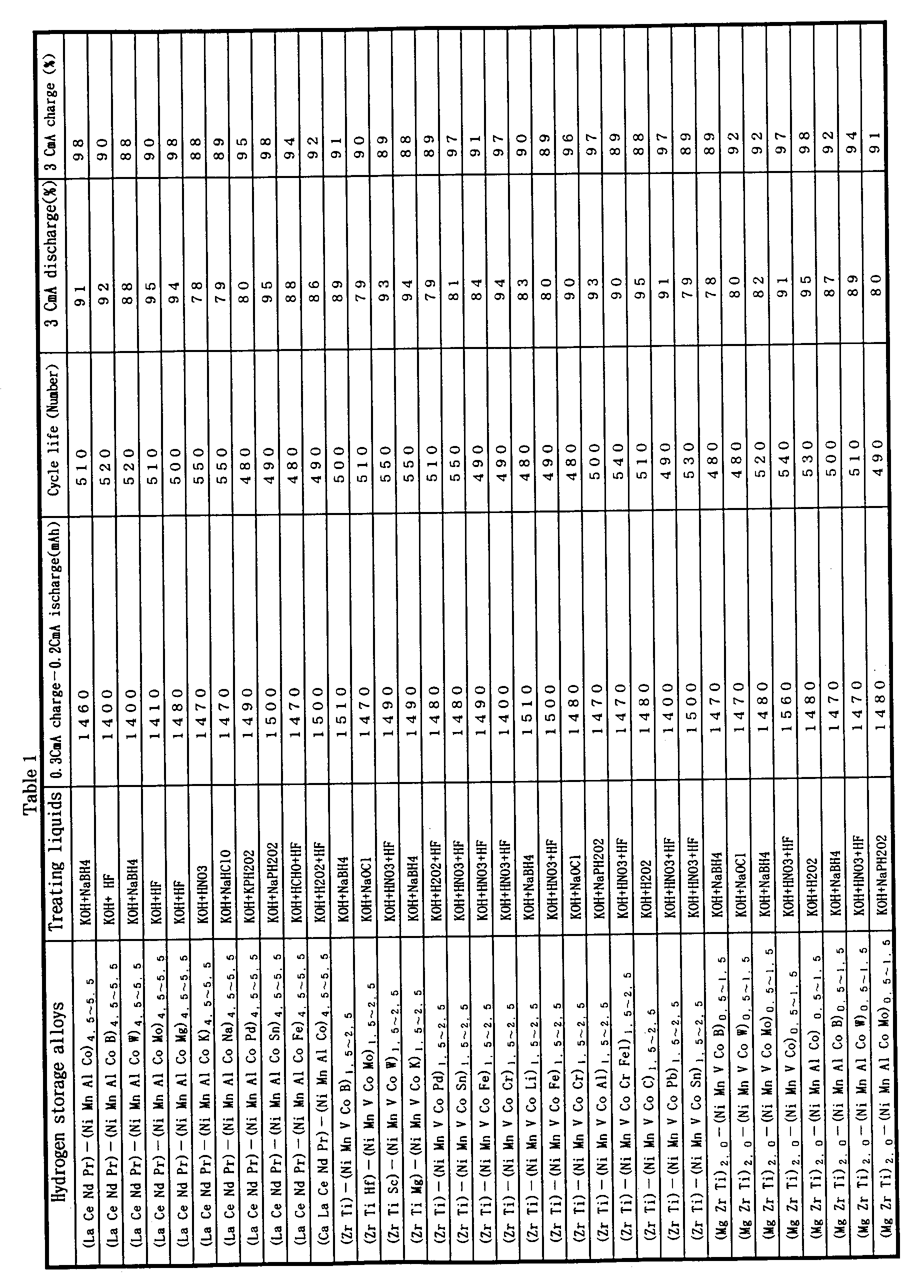

### [Example 10]

The graphite powder that is the carbon material as a negative electrode was used. The graphite was crushed to the grain of 0.1 micron or less average grain size. 0.2 Weight % of 0.01 micron powder shown in Table 2 was added to this powder. Mixing the mixture for 5 h at 3000 °C, it was heat-treated. Then, the mixture was crushed, and the powder of the present invention was obtained.

After the dissolution treatment of this powder for 2 hours at 70 °C with the nitric acid aqueous solution and sufficiently washing this in water, it was analyzed by using SEM-WDX. It was confirmed that the pores of the average size 0.01 micron were formed. The closed type lithium cell of the size AA battery type was manufactured likewise with example 3, and the discharge capacity was measured.

Table 2 shows the results. The discharge capacity of the discharge at 0.2 CmA after the charge of 0.3 CmA was 750 to 670 mAh, and the cycle life was 520 to 480 times. It was 85 to 82 % of the discharge capacity at the discharge of 3 CmA, and it was 85 to 79 % of the discharge capacity at the discharge of 3 CmA.

**Table 2**

| Additives | After 0.3 CmA charge, discharge at 0.2 CmA (mAh) | Cycle life (Number) 3 | Discharge capacity at CmA discharge (%) | Discharge capacity at 3 CmA charg e (%) |
|---|---|---|---|---|
| Fe | 720 | 510 | 85 | 84 |
| Ni | 690 | 490 | 82 | 85 |
| S | 700 | 490 | 82 | 84 |
| Si | 710 | 500 | 82 | 80 |
| Sn | 690 | 520 | 83 | 79 |
| Li | 700 | 480 | 82 | 79 |
| Na | 670 | 490 | 82 | 79 |
| K | 750 | 480 | 85 | 80 |
| Pb | 740 | 480 | 85 | 79 |
| FeOx | 700 | 520 | 84 | 80 |
| NiOx | 710 | 500 | 82 | 85 |
| SiOx | 750 | 510 | 85 | 83 |
| SnOx | 710 | 510 | 83 | 84 |
| LiOx | 670 | 490 | 84 | 82 |
| PbOx | 680 | 500 | 84 | 81 |

### (Comparative example 11)

The graphite powder was used as a negative electrode. This was crushed to the powder of 0.1 micron or less average grain size. The iron powder of the 0.01 micron that is equivalent to 55 weight % of the powder was added. Mixing the mixture for 5 h at 3000 °C, it was heat-treated. This was subjected to the dissolution treatment for 2 h at 70 °C with nitric acid aqueous solution. It was confirmed by using SEM-WDX that after sufficiently washing in water, the pores of the average grain size 0.08 micron were formed. Likewise with example 3, the closed type lithium cell of the size AA battery type was manufactured, and the discharge capacity was measured. The discharge capacity after the charge in the 0.3 CmA and discharge at 0.2 CmA was 470 mAh. The cycle life was 380 times. The charge at 3 CmA was 55 to 64 %, and the discharge at 3 CmA was 57 to 72 %.

### (Comparative example 12)

The graphite powder was used as a negative electrode. This was crushed to the powder of 0.1 micron or less average grain size. 0.01 Weight % of 0.01 microns iron powder were added to this powder. Mixing the mixture for 5 h at 3000 °C, it was heat-treated. This was processed *(the dissolution) for 2 hours in 70 degrees in centigrade by the nitric acid aqueous solution.

It was analyzed by using a sufficiently flushed back SEM-WDX and confirmed that that the pore of the average grain size 0.004 micron was formed. The closed type lithium cell of the size AA battery type was manufactured likewise with example 3, and the discharge capacity was measured. The discharge capacity at 0.2 CmA discharge after the charge at 0.3 CmA was 670 mAh, and the cycle life was 280 times. 55 to 69 % was at 3 CmA charge and 57 to 72 % was at 3 CmA discharge.

### [Example 11]

The conductive polymer material (polyacetylene powder) was used as a positive electrode. This was crushed to the powder of 0.1 micron or less average grain size. Adding 0.2 weight % of 0.05 micron powder shown in Table 3 was added thereto and the mixture was mixed for 5 hours at 300 to 500 °C, and the mixture was heat-treated. Then, it was crushed to obtain the powder of the desired grain size. This powder was subjected to the dissolution treatment for 2 hours at 70 °C with the nitric acid aqueous solution. The powder was analyzed by using SEM-WDX after sufficiently rinsing with water and confirmed that the pores of the average grain size 0.08 micron were formed.

When reacting in the flow of chlorine gas or fluorine gas with the deposition phase to evaporate, the same result also was obtained. The fluorine containing binder was added to this, and it was applied on the Al foil. The electrode of the predetermined thickness was obtained by the roller press. As a negative electrode, the carbon negative electrode was used. The closed type lithium cell of the size AA battery type was manufactured by using these electrodes, and the capacity was measured. The battery capacity was designed as 500 mAh.

Table 3 shows the result. The capacity of the 0.2 CmA discharge after the 0.3 CmA charge was as high as 640 to 570 mAh, and the cycle life is long with 670 to 490 times. 91 to 81 % capacity was obtained in the discharge of 3 CmA, and 87 to 78 % capacity was obtained in the charge of 3 CmA.

**Table 3**

| Additives | After 0.3 CmA charge, discharge at 0.2 CmA (mAh) | Cycle life (Number) | Discharge capacity at 3 CmA discharge (%) | Discharge capacity at 3 CmA charge(%) |
|---|---|---|---|---|
| Fe | 610 | 520 | 91 | 87 |
| Ni | 640 | 500 | 88 | 84 |
| S | 620 | 490 | 82 | 86 |
| Si | 640 | 500 | 85 | 87 |
| Sn | 600 | 510 | 84 | 85 |
| Li | 570 | 670 | 81 | 84 |
| Na | 570 | 620 | 83 | 79 |
| K | 580 | 600 | 84 | 78 |
| Pb | 570 | 610 | 82 | 85 |
| FeOx | 590 | 600 | 91 | 78 |
| NiOx | 600 | 490 | 81 | 80 |
| SiOx | 620 | 500 | 85 | 84 |
| SnOx | 590 | 550 | 86 | 87 |
| LiOx | 600 | 520 | 86 | 86 |
| PbOx | 590 | 550 | 82 | 79 |

### [Example 12]

The conductive polymer material (polyacene powder) was used as a negative electrode. This was crushed to the powder of the average grain size of 0.1 micron or less. 0.2 Weight % of the powders (0.01 microns) shown in Table 4 were added to the above powder and were mixed for 5 hours at 1000 to 3000 °C for heat-treatment. This was subjected to the dissolution treatment for 2 hours at 70 °C with nitric acid aqueous solution.

It was analyzed by using SEM-WDX after sufficient rinsing with water. It was confirmed that the pores of 0.02 micron mean diameter were formed. The chlorine gas stream or the fluorine gas stream was reacted with the deposition phase to evaporate, and the same result was obtained. The fluorine containing binder was added to this, it was applied on the copper foil, the coating and the copper foil were molded by the roller press to manufacture the electrode of the predetermined thickness. The electrode of which main component is LiCoO₂ was used as a positive electrode. The closed type lithium cell of the size AA battery type was manufactured by using these electrodes, and the capacity was measured. The battery capacity was designed as 600 mAh.

Table 4 shows the result. The discharge capacity of the discharge at 0.2 CmA after the charge at 0.3 CmA was as large as 860 to 700 mAh, and the cycle life was as long as 700 to 580 times. It was 93 to 88 % of the discharge capacity in the discharge at 3 CmA, and was 90 to 82 % of the discharge capacity at the charge of 3 CmA.

**Table 4**

| Additives | After 0.3 CmA charge, discharge at 0.2 CmA (mAh) | Cycle life (Number) | Discharge capacity at 3 CmA discharge (%) | Discharge capacity at 3 CmA charge (%) |
|---|---|---|---|---|
| Fe | 860 | 660 | 91 | 88 |
| Ni | 760 | 700 | 88 | 90 |
| S | 740 | 650 | 90 | 82 |
| Si | 790 | 600 | 90 | 82 |
| Sn | 700 | 580 | 91 | 83 |
| Li | 710 | 600 | 88 | 85 |
| Na | 700 | 590 | 88 | 82 |
| K | 700 | 580 | 89 | 86 |
| Pb | 710 | 580 | 93 | 83 |
| FeOx | 860 | 580 | 90 | 89 |
| NiOx | 800 | 600 | 93 | 90 |
| SiOx | 810 | 660 | 92 | 88 |
| SnOx | 710 | 690 | 89 | 89 |
| LiOx | 700 | 700 | 93 | 82 |
| PbOx | 700 | 600 | 90 | 85 |

### [Example 13]

The alloy shown in the fifth table as a negative electrode was used. The alloy materials were melted at a temperature between 1100 and 1500 °C, and the molten metal was cooled at the cooling speed of from 0.015 °C/min. to 0.5 °C/min. and was annealed for about 2 hours at 300 to 500 °C to obtain the desired alloy. This was crushed to the powder of 50 micron or less average grain size, and the powder was subjected to the dissolution treatment for 2 hours at 70 °C with nitric acid aqueous solution. It was confirmed by analysis by using SEM-WDX that the pores with 2 micron mean diameter were formed, after sufficiently washing the powder with water,

The same result was obtained by reacting chlorine gas stream or fluorine gas stream with the deposition phase of the powder to evaporate. The fluorine containing binder was added to this, it was applied on the copper foil, the coating and the copper foil were molded by the roller press, and the electrode of the predetermined thickness was obtained.

The electrode whose principal component is LiCoO₂ was used as a positive electrode was used. The closed type lithium cell of the size AA battery type was manufactured by using these electrodes, and the discharge capacity was measured. The battery capacity was designed as 600 mAh.

Table 5 shows the result. The capacity of the 0.2 CmA discharge after the charge of 0.3 CmA was as high as 760 to 700 mAh, and the cycle life was as long as 530 to 480 times. It was 91 to 85 % of the discharge capacity in the discharge of 3 CmA, and it was 98 to 88 % of the discharge capacity at the charge of 3 CmA.

**Table 5**

| Additives | After 0.3 CmA charge, discharge at 0.2 CmA (mAh) | Cycle life (Number) | Discharge capacity at 3 CmA discharge (%) | Discharge capacity at 3 CmA charge (%) |
|---|---|---|---|---|
| Si-Ni | 760 | 510 | 91 | 98 |
| Ge-Si | 720 | 530 | 90 | 90 |
| Mg-Si | 700 | 480 | 85 | 91 |
| Si-Ni-Ge | 750 | 480 | 88 | 88 |
| Si-Ni-Mg | 700 | 500 | 91 | 90 |
| Si-Ni-Mn | 720 | 510 | 90 | 88 |
| Si-Ni-Cu | 750 | 480 | 88 | 95 |

### [Example 14]

The oxides and sulfides shown in Table 6 were used as the positive electrode. The positive electrode materials shown in Table 6 were crushed to the powder of 1 micron or less average grain size. 0.2 Weight % of the additive powders having 0.1 micron shown in Table 6 were added to the above positive electrode material powders. The mixed powder was heat treated for 5 hours at 900 to 300 °C. The heat treated powder was crushed to produce the powder of the desired grain size. This was subjected to the dissolution treatment for 2 hours at 70 °C with nitric acid aqueous solution. It was confirmed by analyzed by using SEM-WDX that the powder had the pores of 0.2 micron mean diameter.

The chlorine gas stream or fluorine gas stream was reacted with the deposition phase to evaporate to obtain the same result. The fluorine containing binder was added to this, then it was applied on the copper foil. The coating and the copper foil were molded by the roller press to produce the electrode of the predetermined thickness.

As a negative electrode, the carbon negative electrode was used. The closed type lithium cell of the size AA battery type was manufactured by using these electrodes, and the capacity was measured. The battery capacity was designed as 600 mAh.

Table 6 shows the result. The discharge capacity when discharged at 0.2 CmA after the charge of 0.3 CmA was as high as 770 to 680 mAh, and the cycle life is long with 640 to 490 times. The cell had 90 to 81 % of the discharge capacity in the discharge at 3 CmA, and had 85 to 78 % of the discharge capacity in the charge at 3 CmA.

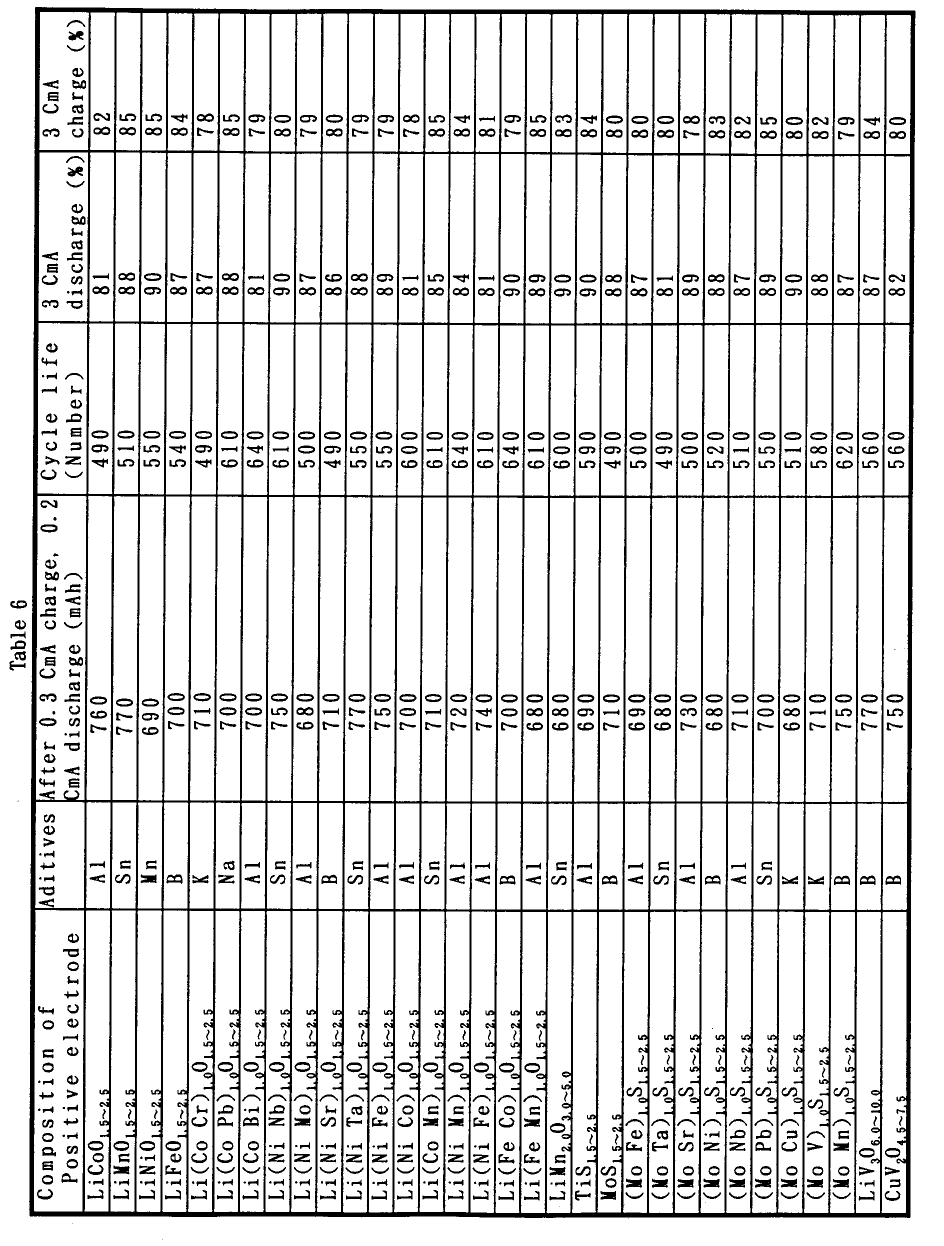

### [Example 15]

The hydrogen storage alloys including 2 kinds of phases shown in Table 7 were used as a negative electrode. Boron was added to the alloys of 1 wt %. The methods of manufacturing the alloys were the method of the dissolution, the mechanical alloying method, the method of mechanical grinding, the molten metal quenching method, or the method of the atomization. The obtained alloys were heat-treated at a temperature of 650 to 1100 °C.

These alloys were subjected to the dissolution treatment for 1 to 50 hours at 60 to 100 °C with KOH aqueous solution, and the alloys were rinsed with water. The formation of the pores of the purpose was confirmed. Likewise with example 1, the electrode was manufactured, the closed type nickel-metal hydride cell of the size AA battery type was manufactured, and the capacity was measured.

Table 7 shows the result. The discharge capacity when discharged at 0.2 CmA after the charge of 0.3 CmA was as high as 1560 to 1400 mAh, and the cycle life was long as 1020 to 880 times. The cell has 97 to 77 % of discharge capacity in the discharge at 3 CmA, and had 98 to 79 % of discharge capacity of the charge at 3 CmA. It was confirmed that the minute cracks were observed when disassembling the cell and observing the electrode with SEM.

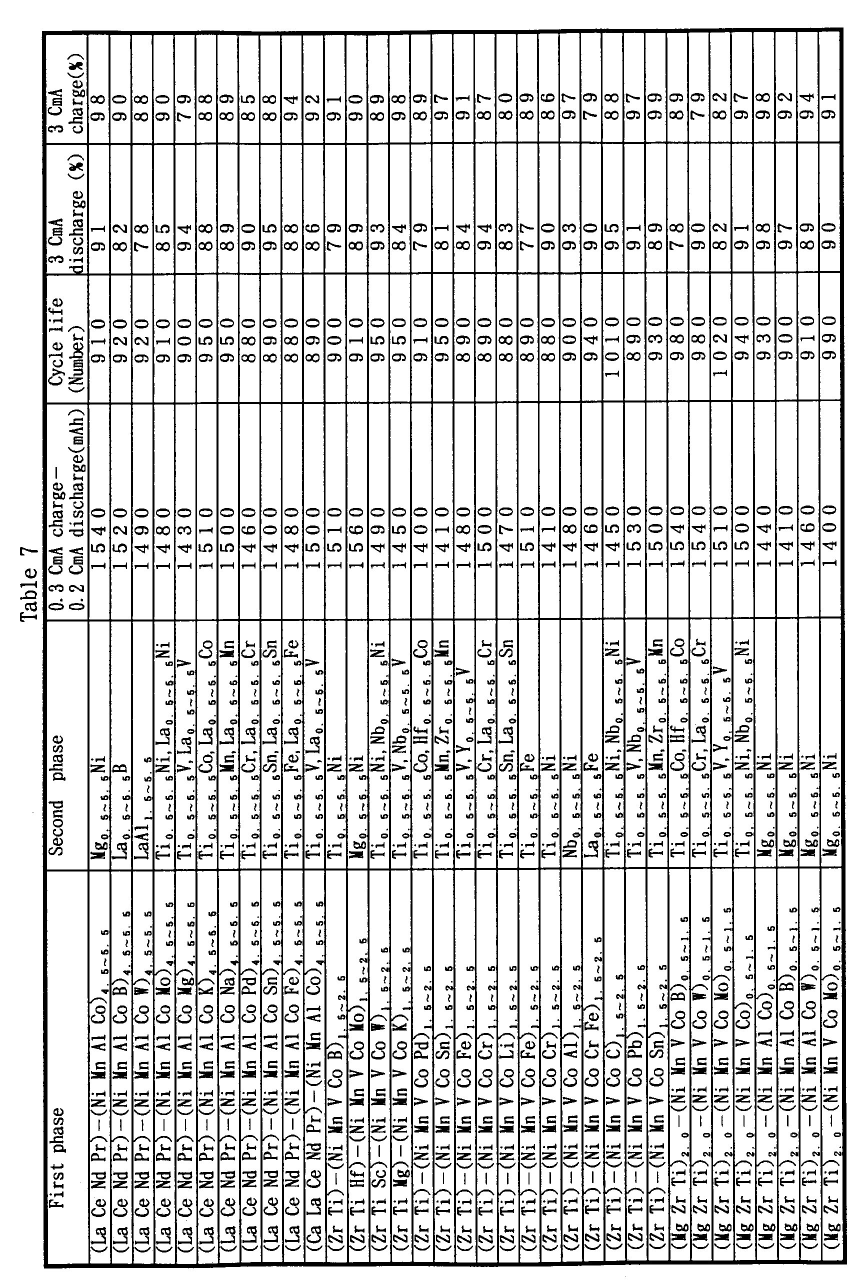

### [Example 16]

The carbon materials including 2 kinds of phases shown in table 8 were used as a negative electrode. 1 Weight % of boron was added to these materials, and the materials were heat-treated at a temperature of 550 to 2600 °C. The materials were subjected to the dissolution treatment for 1 to 50 hours at 50 to 100 °C with the mixed solution of KOH aqueous solution and sodium hydroborate aqueous solution. The materials were processed for 1 to 50 hours at 30 to 60 °C with the mixed solution of the propylene carbonate and the dimethoxyethane. The formation of the desired pores was confirmed. Likewise with example 3, the electrode was manufactured, the closed type lithium cell of the size AA battery type was manufactured, and the capacity was measured.

Table 8 shows the result. The capacity when discharged at 0.2 CmA after the charge at 0.3 CmA was as high as 830 to 610 mAh, and the cycle life was as long as 980 to 780 times. The cell had 93 to 83 % discharge capacity of the discharge at 3 CmA and had 95 to 86 % discharge capacity of the charge at 3 CmA.

It was confirmed that the minute cracks were formed when disassembling the cell and observing the electrode with SEM.

**Table 8**

| First phase | Second phase | 0.3 CmA charge -0.2 CmA discharge (mAh) | Cycle life (Number) | 3 CmA discharge (%) | 3 CmA charge (%) |
|---|---|---|---|---|---|
| graphite | Ag | 800 | 930 | 91 | 88 |
| graphite | Sn | 660 | 820 | 88 | 89 |
| graphite | Pd | 760 | 870 | 93 | 95 |
| graphite | Ga | 690 | 880 | 88 | 89 |
| graphite | In | 780 | 860 | 89 | 91 |
| graphite | Ag-In | 770 | 900 | 84 | 92 |
| graphite | Sn-Ga | 830 | 940 | 87 | 94 |
| graphite | polyaniline | 810 | 920 | 86 | 91 |
| graphite | Ag-Cu | 790 | 850 | 83 | 89 |
| amorphous C | Ag | 670 | 840 | 90 | 94 |
| amorphous C | La | 690 | 790 | 89 | 95 |
| amorphous C | Pd | 800 | 920 | 91 | 89 |
| amorphous C | polyacene | 650 | 980 | 91 | 87 |
| amorphous C | polyaraphenylene | 640 | 820 | 93 | 89 |
| amorphous C | In | 610 | 780 | 90 | 86 |

### [Example 17]

The oxides including 2 kinds of phases shown in Table 9 were used as a positive electrode. 1 Weight % of boron was added to these materials, and the materials were subjected to heat treatment at 250 to 600 °C. The materials were processed for the dissolution treatment for 1 to 50 hours at 50 to 100 °C with acetic acid aqueous solution. The formation of the desired pores was confirmed. Likewise with example 3, the electrode was manufactured, the closed type lithium cell of the size AA battery type was manufactured, and the capacity was measured.

Table 9 shows the result. The discharge capacity when discharged at 0.2 CmA after the charge at 0.3 CmA was as high as 810 - 680 mAh, and the cycle life was 820 to 580 times. The cell had 95 to 80 % of discharge capacity of the discharge at 3 CmA, and had 98 to 82 % of discharge capacity of the charge at 3 CmA. It was confirmed that the minute cracks were formed when disassembling the cell and observing the electrode with SEM.

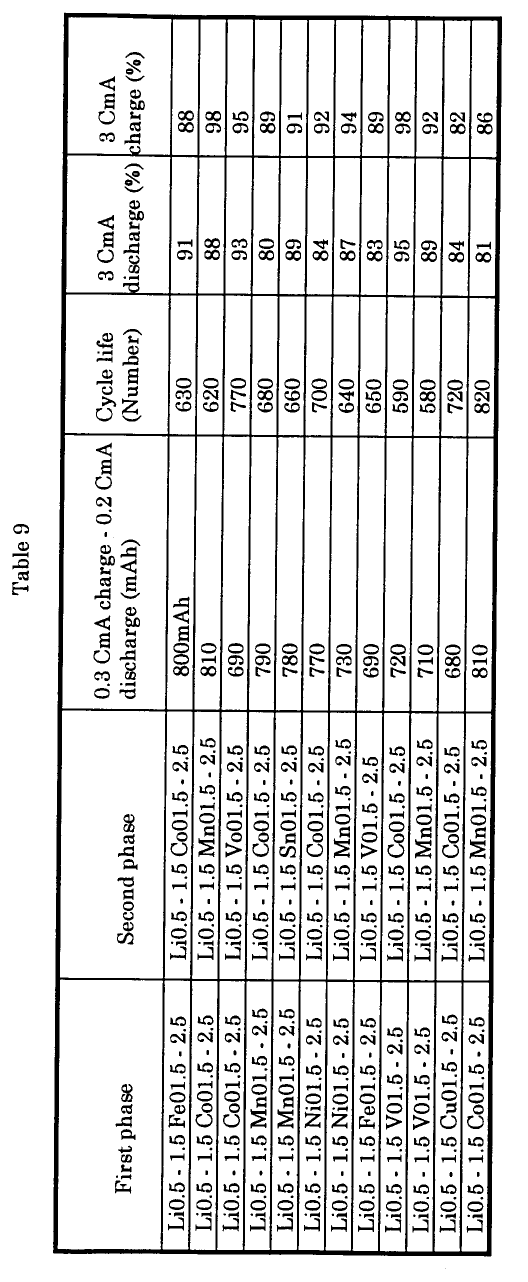

### [Example 18]

A hydrogen storage alloy of which composition is Nb_{0.1}Zr_{0.9}Ni_{1.1}Mn_{0.6}V_{0.2}Co_{0.1}B_{0.03} was used as a negative electrode. The method of manufacturing the alloy is the following. The alloy powder was sprayed by the method of the atomization in the Ar gas atmosphere ( method of gas atomizing) into which the oxygen of 10 to 1000 ppm was mixed, and then was subjected to heat treatment at 650 to 1100 °C. When observing this section with SEM, several pores were confirmed. The formation of the coating consisting of oxygen and Zr when analyzing the composition of the pores was confirmed.

Likewise with example 1, the electrode was manufactured, the closed type nickel-metal hydride cell of the size AA battery type was manufactured, and the capacity was measured. The discharge capacity when discharged at 0.2 CmA after the charge at 0.3 CmA was as high as 1540 mAh, and the cycle life was as long as 1080 times. The cell had 97 % of discharge capacity of the discharge at 3 CmA, and had 89 % of discharge capacity of the charge at 3 CmA. It was confirmed that the minute cracks were formed when disassembling the cell and observing the electrode with SEM.

### [Example 19]

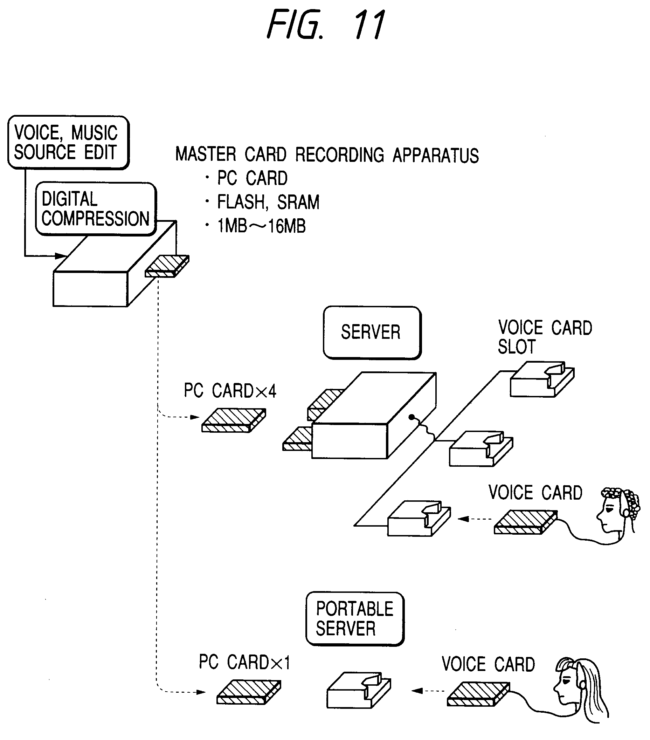

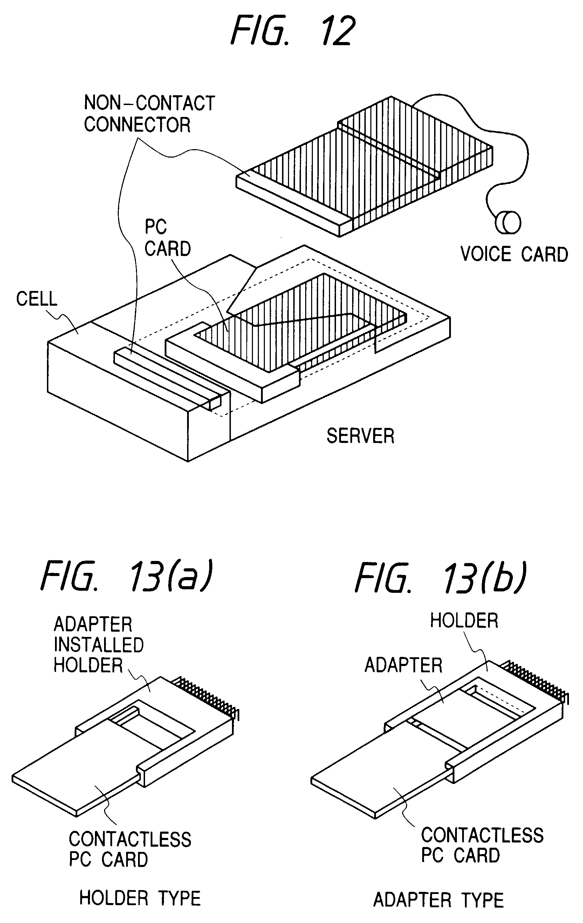

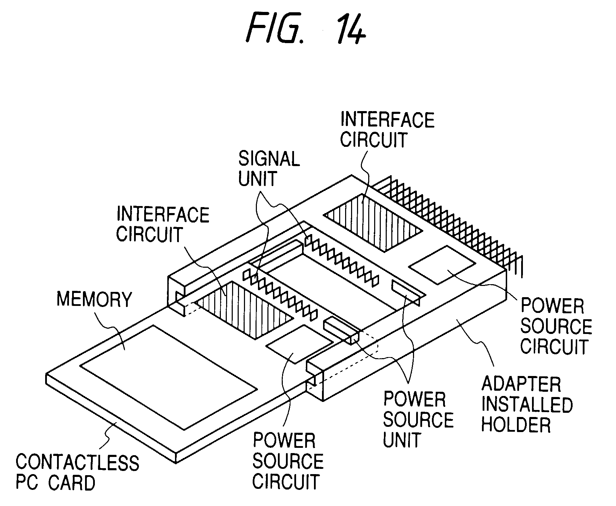

An example of applying the combined cells of examples 1 - 18 to the voice card system is shown. Fig. 11 shows an example of the guidance system using the voice card. Fig. 12 shows an example of the construction schematic view of the server and the card. Fig. 13 and Fig. 14 show an example of the PC card. The voice card system was composed of the voice card having a semiconductor memory and audio regeneration function and a server storing the compressed digital audio data.

The secondary batteries of examples 1 - 18 were installed in the server. The capacity of the used secondary batteries was 2 - 10 Wh. And, the charging time was for 30 minutes. The longest operation time of the server at this time was 5 to 50 hours. The ratio of the longest operation time against the charging time was 10 - 100. And, the secondary batteries of examples 1 - 18 were installed in the PC card. The capacity of the secondary battery was 0.5 Wh. The charging time was 30 minutes.

The longest operation time of the PC card at this time was 50 to 100 hours. The ratio of the longest operation time to the charging time was 100 - 200.

### (Comparative example 13)

Likewise with example 19, the secondary battery of comparative examples 1 - 12 was installed in the server. The capacity of the used secondary battery was 2 - 10 Wh. The charging time was 1 hour.

The longest operation time of the server at this time was as short as 0 to 8 hours. Most of cells took place the liquid leak and did not make the normal discharge. The secondary batteries of comparative examples 1 - 12 also were installed in the PC card. The capacity of the used secondary battery was 0.5 Wh. The charging time was 1 hour.

The longest operation time of the PC card at this time was the 0 to 9.5 h, and the ratio of the longest operation time to the charging time was 0 to 9.5. Most of cells took place the liquid leak and did not make the normal discharge.

### [Example 20]

The TFT circuit substrate in which a 5 inch liquid crystal display panel, a high-speed bus interface, a drawing controlling circuit, a display interface, a synchronous control, a field memory storage comptroller, a circumference circuit for the panel driving and a field memory storage were integrated was manufactured.

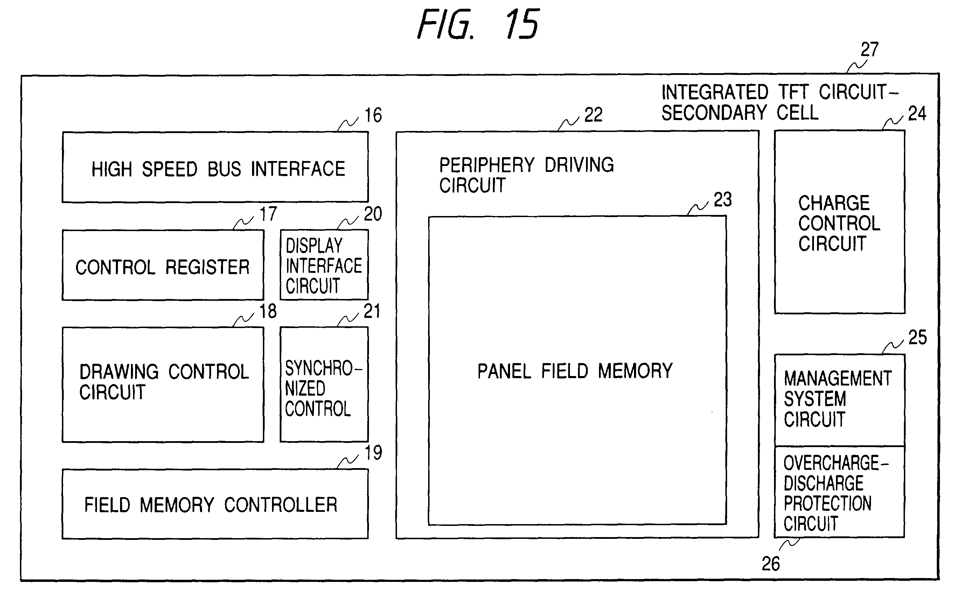

The secondary batteries of examples 1 - 18 were mounted on the rear side of the substrate. The display of the reflection mode type was used for the liquid crystal display panel. The diagram of the TFT circuit substrate is shown in Fig. 15. The liquid crystal display system was manufactured by using this. The capacity of the used secondary battery was 30 - 85 Wh. The charge time was for 30 minutes at 60 to 170 W.

The longest operation time of the display at this time was 40 to 100 hours. The ratio of the longest operation time to the charging time was 80 - 200.

### (Comparative example 14)

Likewise with example 20, the secondary battery of comparative examples 1 - 12 was mounted on the rear side of the substrate. The liquid crystal display system was manufactured using this. The capacity of the used secondary battery was 30 - 85 Wh. The charging time was 30 minutes at 60 to 170 W.

The longest operation time of the display at this time was as short as 0 to 4 hours, and the ratio of the longest operation time to the charging time was 0 to 8. Most of the cells took place liquid leak, and the normal discharge of the cells could not be done.

### [Example 21]

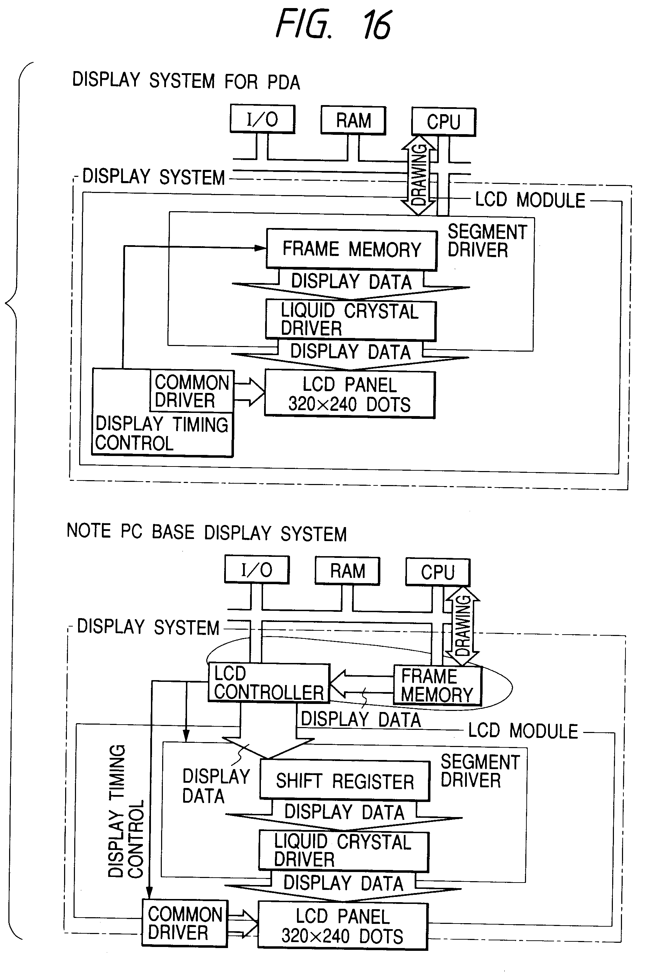

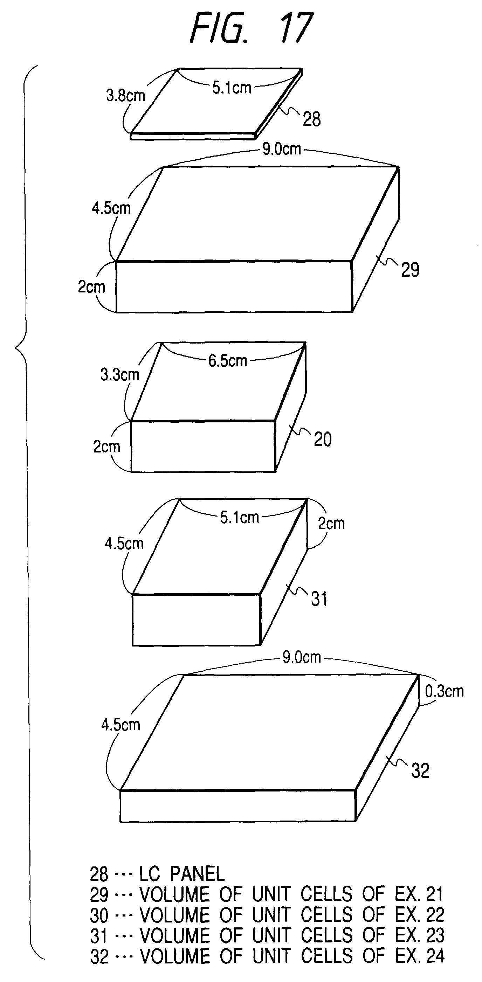

An example of the 2.5 inch liquid crystal display system is shown in Fig. 16. The secondary battery was arranged in the rear side of this liquid crystal display panel. Fig. 17 shows the volume of the set of the secondary batteries of example 1. The secondary batteries were put in the volume of the width of 4.5 cm, the length of 9 cm and the thickness of 2 cm. The capacity of the secondary batteries was 20 Wh. The charging time was 30 minutes at 40 W.

The longest operation time of the display at this time was 20 hours. The ratio of the longest operation time to the charging time was 40.

### [Example 22]

An example of the 2.5 inch liquid crystal display system is shown in Fig. 16. The secondary batteries was arranged in the rear side of this liquid crystal display panel. The volume of the set of the secondary batteries of example 10 is shown in Fig. 17. The secondary battery was put in the volume of a width of 3.3 cm, a length of 6.5 cm and a thickness of 2 cm. The capacity of the secondary batteries was 15 Wh. The charge time was 30 minutes at 30 W.

The longest operation time of the display at this time was 10 hours. The ratio of the longest operation time to the charging time was 20.

### [Example 23]

The example of the 2.5 inch liquid crystal display system is shown in Fig. 16. The secondary batteries were arranged in the rear side of this liquid crystal display panel. The volume of the set of the secondary batteries of example 10 is shown in Fig. 17. The secondary battery was put in the volume of a width of 4.5 cm, a length of 5.1 cm and a thickness of 2 cm. The capacity of the used secondary batteries was 15 Wh. The charge time was 30 minutes at 30 W.

The longest operation time of the display at this time was 10 hours. The ratio of the longest operation time to the charging time was 20.

### [Example 24]

The example of the 2.5 inch liquid crystal display system is shown in Fig. 16. The secondary battery was arranged in the rear side of this liquid crystal display panel. The volume of the set of the secondary batteries of example 10 is shown in Fig. 17. The secondary battery was put in the volume of a width 4.5 cm, a length of 9 cm and a thickness of 0.3 cm. The capacity of the secondary batteries was 5 Wh. The charging time was 30 minutes at 10 W.

The longest operation time of the display at this time was 10 hours. The ratio of the longest operation time to the charging time was 20.

### [Example 25]

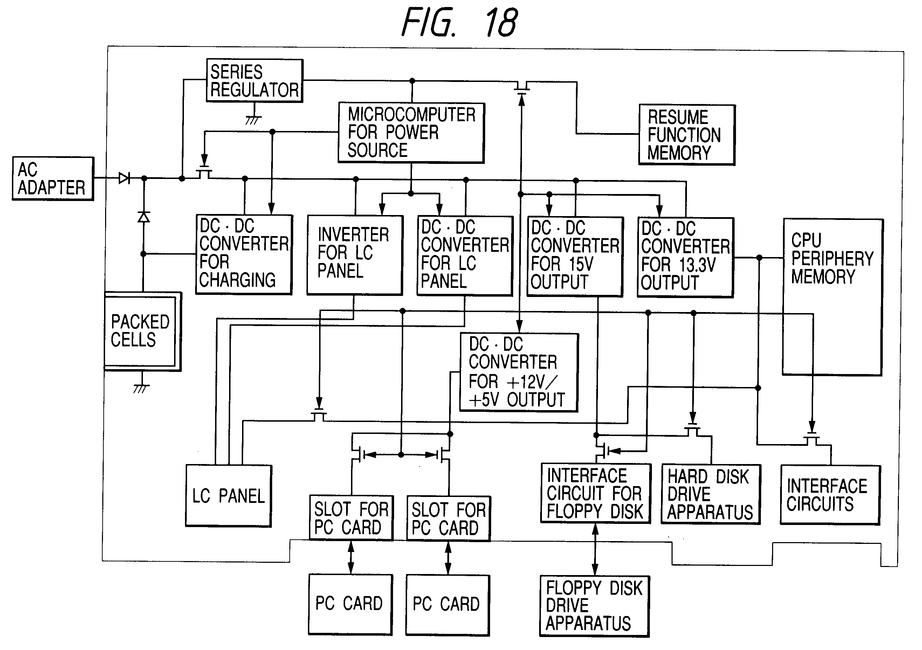

An example of the power management function of the note personal computer is shown in Fig. 18. As a secondary battery, operation confirmation was done by using the secondary battery of the cell of examples 1 - 18. The cell showed the longest operation time of 10 to 50 hours with respect to a 30 minute charge.
The cell was applied to the portable telephone and also PHS. The receiving stand-by-time that is the longest operation time was 10 to 15 hours.

### [Example 26]

The secondary batteries of examples 1 - 18 were applied to an electric vehicle. The body weight was 1000 kg, and the weight of the mounted secondary batteries was 200 kg. The charging time was 30 minutes. At this time, the running distance at a driving speed of 40 km/h was 250 - 550 km.

The minimum time necessary for the movement from the stopped point to 400 m was 10 to 18 seconds.

### [Example 27]

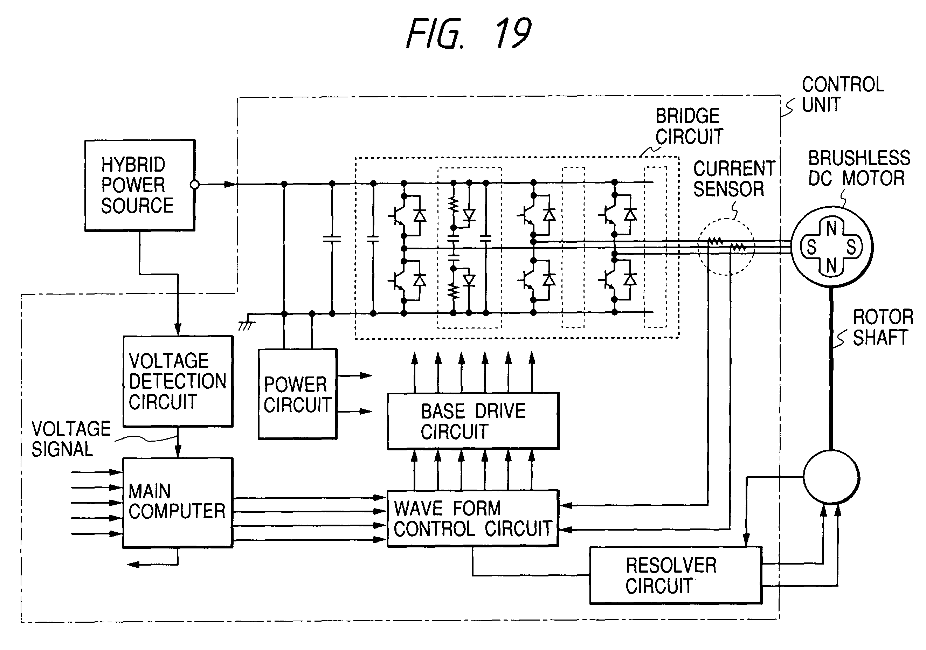

The secondary batteries of examples 1 - 18 were applied to a hybrid electric power unit used for the motor driving of the electric vehicle. The driving control system of the electric vehicle using one example of the hybrid electric power unit is shown in Fig. 19. The hybrid power source is connected with the control part through the output terminal. The electric power supplied from the hybrid power source is converted into the three-phase alternating current through a bridge circuit.

The rotation axis of the brush loess DC motor is connected to the driving mechanism of the electric vehicle and is connected to the that is the rotor position transducer.

The resolver circuit inputs the resolver signal and outputs the signal that represents the excitation place to the electric current ripple controlling circuit. The signal from the voltage detector is input into the main computer as well as the signal, etc. from the velocity sensor. These signals are supplied to the electric current ripple controlling circuit. The electric current ripple controlling circuit outputs the pulse width modulation signals to the base drive circuit.

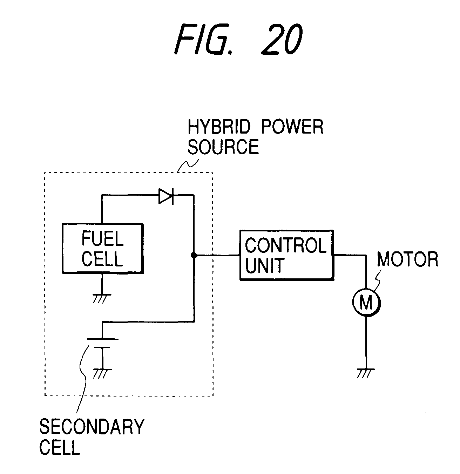

The base drive circuit drives the bridge circuit in response to the pulse width modulation signal. An example of the hybrid power source is shown in Fig. 20. The secondary batteries of examples 1 - 18 were used as a secondary battery electric power resource that supplies the electric power to the control unit. As a fuel cell, cells such as the phosphoric acid type, the methanol type, the molten carbonate type or the macromolecule solid electrolyte type can be used.

The fuel cell is connected to the secondary battery in parallel through the diode for contraflow prevention. According to the travel motion condition of the electric vehicle, the electric power can be supplied selectively from the fuel cell or the secondary battery to the control unit.

The body weight was 1000 kg, the weight of the mounted secondary batteries was 100 kg, and the weight of the fuel cell was 100 kg. The charging time was 30 minutes. The running distance at driving speed of 40 km/h was 300 - 550 km.

### Industrial Applicability

The large energy capacity of the secondary cell use system was achieved by the present invention, and the rapid charging property and the rapid discharge property were greatly improved.

## Claims

1. A system using secondary cell comprising at least one of a heat source, motor, controlling circuit, driving circuit, LSI, IC and display element each having a capacity of 0.5 to 50 kWh and secondary cells, wherein at least one of the secondary cells has a discharge time for at least 15 minutes at a discharge of 580 W/l or more.

2. A system using secondary cell comprising at least one of a heat source, motor, controlling circuit, driving circuit, LSI, IC and display element each having a capacity of 0.5 to 50 kWh and secondary cells, wherein at least one of the secondary cells has ability of a discharge of 200 W/l or more at a charge of 300 W/l or more and at a discharge capacity of 90 % or more.

3. A system using secondary cell comprising at least one of a heat source, motor, controlling circuit, driving circuit, LSI, IC and display element each having a capacity of 0.5 to 50 kWh and secondary cells, wherein the ratio of the longest operation time of the system against the charge time is 10 or more, preferably 40 to 200.

4. The system using secondary cell according to any one of claims 1 to 3, further comprising at least one of a liquid crystal display, multiple-layered wiring board, PCMCIA card (PC card), voice card, modem, portable telephone, FAX and IC for battery.

5. A system using secondary cell for use in a liquid crystal display device, comprising a liquid crystal display panel, a circumference circuit for driving the panel, a display interface circuit and a memory storage, wherein the secondary cells are possible to make a rapid charge of one hour or less, preferably 30 minutes or less, and to make the longest continuous operation of 10 hours or more, preferably 40 hours or more.

6. In a liquid crystal display system which uses the system using secondary cell of claim 5, wherein the secondary cells have the capacity of 2 Wh or more per 1 inch of the length liquid crystal display panel, which further comprises at least one of a battery charger, charge control equipment, charge controlling circuit and management system.

7. In the liquid crystal display system according to claim 6, wherein the liquid crystal display system has the volume of a length of o.85 to 1.2 to the width of the screen of the liquid crystal display panel, a length of 1.0 to 1.8 to the length of the screen of the liquid crystal display panel and a thickness of 3 to 20 mm, and the secondary batteries are provided in this volume.

8. In the liquid crystal display system according to claim 6, wherein the liquid crystal display system is provided with secondary batteries composed of the set cells of 6 parallels or less and 2 series or less.

9. A liquid crystal display system comprises the lithium secondary batteries which are lithium secondary batteries.

10. In the liquid crystal display system according to claim 6, wherein the liquid crystal display system is provided with secondary batteries of 3 to 5 series of 4 parallels or less.

11. The liquid crystal display system of which the secondary batteries of the liquid crystal display system of claim 10 is the nickel-hydrogen secondary batteries.

12. The system using secondary cells of claim 4, wherein at least one of a liquid crystal display, multiple-layered wiring board, PCMCIA card (PC card), voice card, modem and IC for battery is integrated with the secondary batteries.

13. The system using secondary cells of claim 12, which comprises the overcharge of the secondary battery, over discharge prevention circuit or charging and discharging controlling circuit, wherein they are integrated with the circuit in the system.

14. The system having the function of a portable information terminal, a portable computer, a pencomputer, a portable telephone, a personal-handy phone and a video telephone using the liquid crystal display system of any one of claims 5 to 11.

15. In the system using secondary cells of claim 1 - 2, which further comprises at least one of an electric vehicle, an elevator, an electric car and the emergency power source.

16. In the electric vehicle using secondary cells with the motor driven by the secondary battery as a power source, wherein the secondary batteries are capable of being charged within 30 minutes or less, and being able to run for the travel of 250 km or more at a driving speed of 40 km/h or more.

17. In the electric vehicle of claim 16, wherein the minimum time necessary for the movement from the stopping point of the electric vehicle to 400 m is 18 seconds or less.

18. In the electric vehicle using secondary cells with the control unit for controlling the operation of these output, which comprises at least a motor driven by the secondary battery and a fuel cell or a solar battery as a power source, the secondary battery is capable of being charged within 30 minutes or less. The running distance that the travel motion at the driving speed of 40 km/h is 300 km or more by one discharge of the secondary battery and one generation of electrical energy of the fuel cell or the solar battery and the sum of the weight of the secondary battery and the fuel cell or the solar battery is 250 kg or less.
